(19) **Europäisches Patentamt / European Patent Office / Office européen des brevets**

(11) **EP 4 436 167 A1**

(12) **EUROPEAN PATENT APPLICATION**
published in accordance with Art. 153(4) EPC

(43) Date of publication:
**25.09.2024 Bulletin 2024/39**

(21) Application number: **22911637.1**

(22) Date of filing: **18.11.2022**

(51) International Patent Classification (IPC):
*H04N 19/105* (2014.01)   *H04N 19/593* (2014.01)
*H04N 19/11* (2014.01)   *H04N 19/176* (2014.01)
*H04N 19/186* (2014.01)   *H04N 19/70* (2014.01)

(52) Cooperative Patent Classification (CPC):
**H04N 19/105; H04N 19/11; H04N 19/176;**
**H04N 19/186; H04N 19/593; H04N 19/70**

(86) International application number:
**PCT/KR2022/018345**

(87) International publication number:
**WO 2023/121000 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2021 KR 20210185675**
**16.11.2022 KR 20220153411**

(71) Applicants:
• **Hyundai Motor Company**
**Seoul 06797 (KR)**
• **Kia Corporation**
**Seocho-gu**
**Seoul 06797 (KR)**
• **Research Business Foundation**
**Sungkyunkwan University**
**Suwon-si, Gyeonggi-do 16419 (KR)**

(72) Inventors:
• **JEON, Byeung Woo**
**Seongnam-si Gyeonggi-do 13597 (KR)**
• **PARK, Jee Yoon**
**Seoul 04148 (KR)**
• **LEE, Yu Jin**
**Suwon-si Gyeonggi-do 16421 (KR)**
• **HEO, Jin**
**Yongin-si Gyeonggi-do 16836 (KR)**
• **PARK, Seung Wook**
**Yongin-si Gyeonggi-do 16803 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR VIDEO CODING USING ADAPTIVE MULTI-REFERENCE LINES**

(57)   A method and an apparatus are disclosed for video coding using adaptive multiple reference lines. The video coding method and the apparatus generate a predictor of the current block in intra-predicting the current block by separately using the top reference line and the left reference line of the current block. The video coding method and the apparatus use multiple reference lines for one pixel in the current block or use different reference lines for different pixels in the current block for intra-predicting the current block.

EP 4 436 167 A1

N

·
·
·

N · · ·

Top-Referencing Area

Left-Referencing Area

☐ Current Block

▧ intra_luma_ref_inx 0

▨ intra_luma_ref_inx 1

◨ intra_luma_ref_inx 2

⊡ intra_luma_ref_inx 3

▦ As Top-Referencing Area,
Use intra_luma_ref_idx 0
To Make Prediction

⬡ As Left-Referencing Area,
Use intra_luma_ref_idx 1
To Make Prediction

*FIG. 7*

**Description**

[Technical Field]

The present disclosure relates to a video coding method and an apparatus using adaptive multiple reference lines.

[Background]

The statements in this section merely provide background information related to the present disclosure and do not necessarily constitute prior art.

Since video data has a large amount of data compared to audio or still image data, the video data requires a lot of hardware resources, including a memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/AVC, High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

Intra prediction utilizes information on pixels within the same picture where the current block is to be encoded and thereby predicts the pixel values of the current block. In the intra prediction, one of a plurality of intra-prediction modes may be selected and used to predict the current block based on the features of the video images. An encoder selects one of the many intra-prediction modes and uses the selected intra-prediction mode to encode the current block. The encoder may then transfer information about that mode to a decoder.

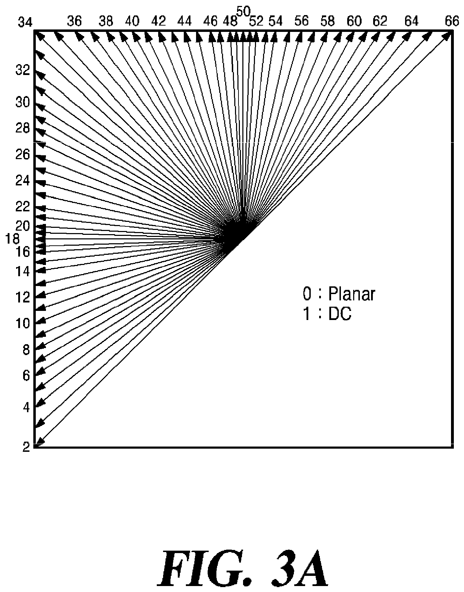

HEVC technology utilizes a total of 35 intra-prediction modes for intra prediction, including 33 angular modes that are directional and 2 non-angular modes that are nondirectional. However, as the spatial resolution of the video increases from 720×480 to 2048×1024 or 8192×4096, the unit size of the predicted block is increasingly large, which needs further more intra-prediction modes. As illustrated in FIG. 3A, the VVC (Versatile Video Coding) technique utilizes 65 subdivided prediction modes for intra-prediction and allows for a greater variety of prediction directions than in the prior art.

On the other hand, since the predictor in intra prediction is generated based on the neighboring pixels of the current block, the performance of the intra-prediction technique is related to the proper selection of reference pixels. In this regard, besides obtaining reference pixels from a more accurate orientation by diversifying the prediction modes as described above, one may consider increasing the number of available candidate reference pixels. Prior art techniques for the latter include Multiple Reference Line (MRL) or Multiple Reference Line Prediction (MRLP). The MRL technique not only uses reference lines adjacent to the current block for prediction of the current block but can also use pixels further away as reference pixels. However, MRL has a deficiency in that despite its use of multiple candidate reference lines, a single index indicates the top and left reference lines, and all pixels in the current block use just a single reference line. Therefore, there is a need for a method of utilizing reference lines efficiently to improve video coding efficiency and enhance video quality.

[Disclosure]

[Technical Problem]

The present disclosure seeks to provide a video coding method and an apparatus for generating a predictor of the current block in intra-predicting the current block by separately using the top reference line and the left reference line of the current block. The video coding method and the apparatus use multiple reference lines for one pixel in the current block or use different reference lines for different pixels in the current block for intra-predicting the current block.

[Technical Solution]

At least one aspect of the present disclosure provides a method of intra-predicting a current block by a video decoding device. The method includes decoding from a bitstream an adaptive multiple reference line (MRL) flag that indicates whether to apply an adaptive MRL technique when an intra-prediction mode of the current block is greater than a horizontal mode and less than a vertical mode. The method also includes decoding the intra-prediction mode from the bitstream and checking the adaptive MRL flag. When the adaptive MRL flag is true, the method further includes

determining, for a top-referencing area in the current block, a top reference line of one among multiple reference lines located at a top side of the current block. The method further includes determining, for a left-referencing area in the current block, a left reference line of one among multiple reference lines located to a left side of the current block. Here, the top reference line is indicated by a top reference line index and the left reference line is indicated by a left reference line index. The method further includes generating, for the top-referencing area and the left-referencing area, predictors by using the top reference line and the left reference line according to the intra-prediction mode.

Another aspect of the present disclosure provides a method of encoding a current block by a video encoding device. The method includes determining an intra-prediction mode of the current block. The method also includes determining an adaptive multiple reference line (MRL) flag that indicates whether to apply an adaptive MRL technique when the intra-prediction mode of the current block is greater than a horizontal mode and less than a vertical mode and checking the adaptive MRL flag. When the adaptive MRL flag is true, the method further includes determining, for a top-referencing area in the current block, a top reference line of one among multiple reference lines located at a top side of the current block. The method further includes determining, for a left-referencing area in the current block, a left reference line of one among multiple reference lines located to a left side of the current block. Here, the top reference line is indicated by a top reference line index and the left reference line is indicated by a left reference line index. The method further includes generating, for the top-referencing area and the left-referencing area, predictors by using the top reference line and the left reference line according to the intra-prediction mode.

Yet another aspect of the present disclosure provides a computer-readable recording medium storing a bitstream generated by a video encoding method. The video encoding method includes determining an intra-prediction mode of a current block. The video encoding method also includes determining an adaptive multiple reference line (MRL) flag that indicates whether to apply an adaptive MRL technique when the intra-prediction mode of the current block is greater than a horizontal mode and less than a vertical mode and checking the adaptive MRL flag. When the adaptive MRL flag is true, the video encoding method further includes determining, for a top-referencing area in the current block, a top reference line of one among multiple reference lines located at a top side of the current block. The video encoding method further includes determining, for a left-referencing area in the current block, a left reference line of one among multiple reference lines located to a left side of the current block. Here, the top reference line is indicated by a top reference line index and the left reference line is indicated by a left reference line index. The video encoding method further includes generating, for the top-referencing area and the left-referencing area, predictors by using the top reference line and the left reference line according to the intra-prediction mode.

[Advantageous Effects]

As described above, the present disclosure provides a video coding method and an apparatus for generating a predictor of the current block in intra-prediction the current block by separately using the top reference line and the left reference line of the current block. The video coding method and the apparatus use multiple reference lines for one pixel in the current block, or use different reference lines for different pixels in the current block. Thus, the video coding method and the apparatus improve video coding efficiency and enhance video quality.

[Brief Description of the Drawings]

FIG. 1 is a block diagram of a video encoding apparatus that may implement the techniques of the present disclosure.
FIG. 2 illustrates a method for partitioning a block using a quadtree plus binarytree ternarytree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIG. 6 is a diagram illustrating reference lines of a multiple reference line (MRL) technology, according to at least one embodiment of the present disclosure.
FIG. 7 is a diagram illustrating the separate use of a top reference line and a left reference line, according to at least one embodiment of the present disclosure.
FIG. 8 is a diagram illustrating a top maximum distance and a left maximum distance, according to at least one embodiment of the present disclosure.
FIG. 9 is a diagram illustrating a weighted combination of multiple predictors, according to at least one embodiment of the present disclosure.
FIG. 10 is a diagram illustrating different reference lines by respective internal areas, according to at least one embodiment of the present disclosure.
FIG. 11 is a diagram illustrating the number of internal areas and a reference line for each area, according to at least one embodiment of the present disclosure.

FIG. 12 is a diagram illustrating the number of internal areas and a reference line for each area, according to another embodiment of the present disclosure.

FIG. 13 is a diagram illustrating the number of internal areas and a reference line for each area, according to yet another embodiment of the present disclosure.

FIG. 14 is a diagram illustrating a combination of Example 1 and Example 2, according to at least one embodiment of the present disclosure.

FIG. 15 is a diagram illustrating a combination of Example 1 and Example 3, according to at least one embodiment of the present disclosure.

FIG. 16 is a diagram illustrating a combination of Example 1, Example 2, and Example 3, according to at least one embodiment of the present disclosure.

FIG. 17 is a flowchart of an encoding method of the current block by a video encoding device, according to at least one embodiment of the present disclosure.

FIG. 18 is a flowchart of a decoding method of the current block by a video decoding device, according to at least one embodiment of the present disclosure.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

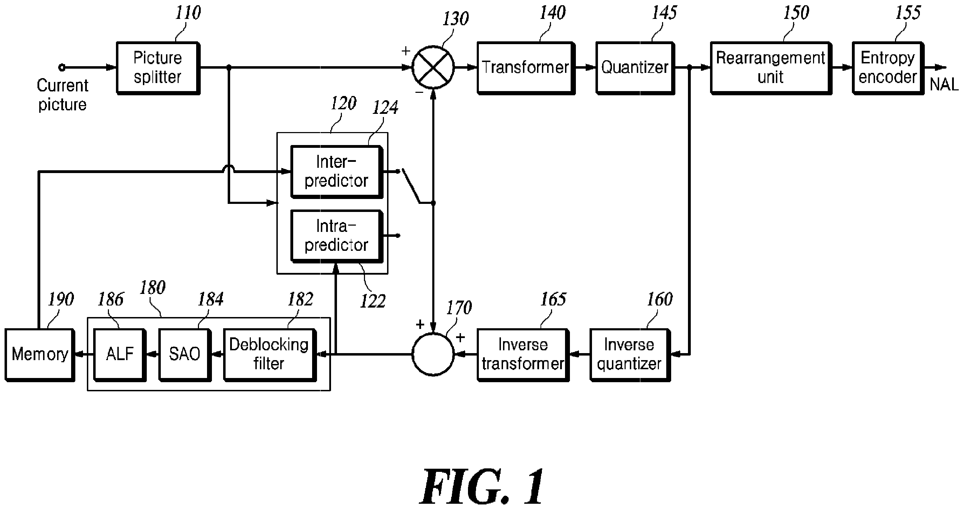

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternary tree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternary tree (QTBTTT) structure may be used. Here, a binarytree ternary tree (BTTT) is added to the tree structures to be referred to as a multiple-type tree (MTT).

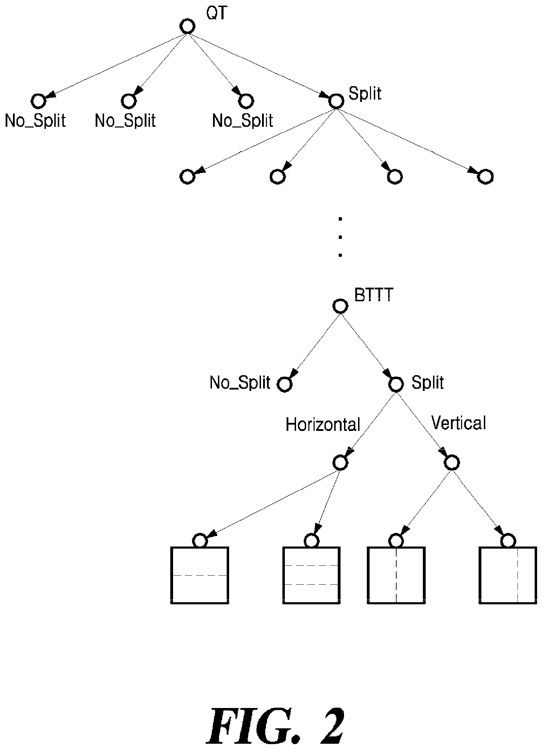

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 non-directional modes including a Planar mode and a DC mode and may include 65 directional modes. A neighboring pixel and an arithmetic equation to be used are defined differently according to each prediction mode.

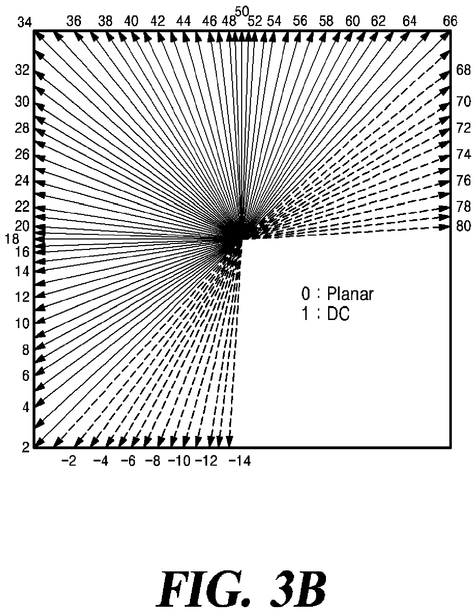

For efficient directional prediction for the current block having a rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current bock in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

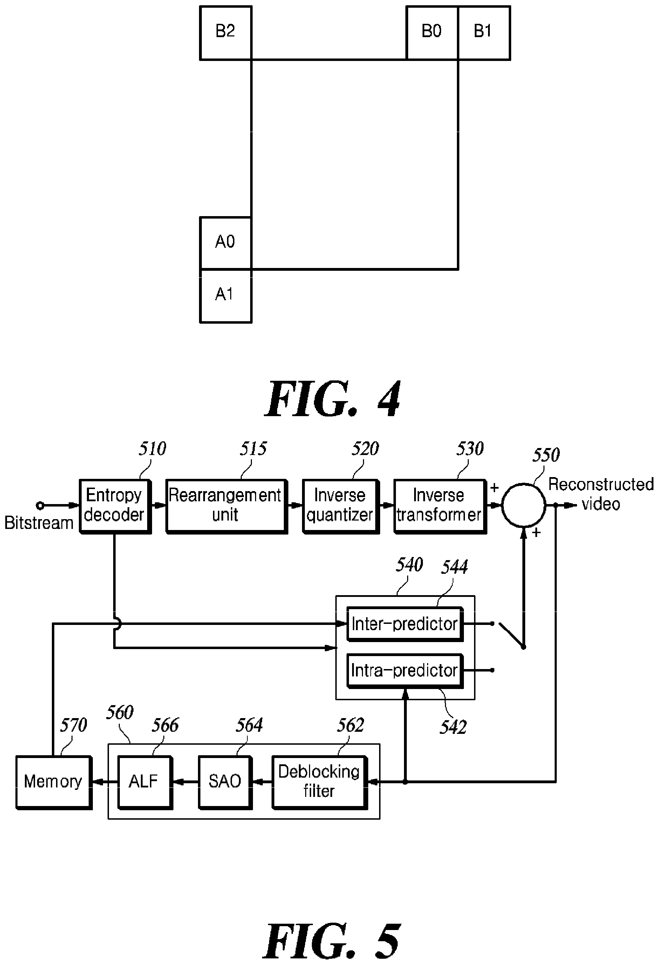

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure.

As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

The present disclosure in some embodiments relates to encoding and decoding video images as described above. More specifically, the present disclosure provides a video coding method and an apparatus for generating a predictor of the current block in intra-predicting the current block by separately using the top reference line and the left reference line of the current block. The video coding method and the apparatus use multiple reference lines for one pixel in the current block or use different reference lines for different pixels in the current block.

The following embodiments may be performed by intra predictor 122 in the video encoding device. The following embodiments may also be performed by the intra predictor 542 in the video decoding device.

The video encoding device when encoding the current block may generate signaling information associated with the present embodiments in terms of optimizing rate distortion. The video encoding device may use the entropy encoder 155 to encode the signaling information and may transmit the encoded signaling information to the video decoding device. The video decoding device may use the entropy decoder 510 to decode, from the bitstream, the signaling information associated with decoding the current block.

In the following description, the term "target block" may be used interchangeably with the current block or coding unit (CU). The term "target block" may refer to some region of the coding unit.

Further, the value of one flag being true indicates when the flag is set to 1. Additionally, the value of one flag being false indicates when the flag is set to 0.

The following embodiments are described about a video encoding device but may be equally applicable to a video decoding device.

**I. Most Probable Mode (MPM) and Multiple Reference Line (MRL)**

Several techniques are introduced to improve coding efficiency by using intra prediction. The MPM technique utilizes the intra-prediction mode of neighboring blocks for the intra prediction of the current block. The video encoding device generates an MPM list to include intra-prediction modes derived from predefined locations spatially adjacent to the current block. When an MPM mode is applied, the video encoding device may send a flag, intra_luma_mpm_flag, to the video decoding device indicating whether the MPM list is to be used. If intra_luma_mpm_flag is not present, intra_luma_mpm_flag is inferred to be 1. In addition, the video encoding device may send the MPM index, intra_luma_mpm_idx, in place of the index of the prediction mode, to improve the coding efficiency of the intra-prediction mode.

The MRL technique, when the current block is predicted according to the intra-prediction technique, may use not only a reference line adjacent to the current block but also pixels that exist further away as reference pixels. In this case, pixels with the same distance from the current block are grouped and called a reference line. The MRL technique performs the intra prediction of the current block by using the pixels located on the selected reference line.

The video encoding device signals the reference line index of intra_luma_ref_idx to the video decoding device to indicate the reference line to use when performing the intra prediction. For each index, the bit allocation may be represented as shown in Table 1.

[Table 1]

| intra_luma_ref_idx | Bit allocation |
|---|---|
| 0 | 0 |
| 1 | 10 |
| 2 | 11 |

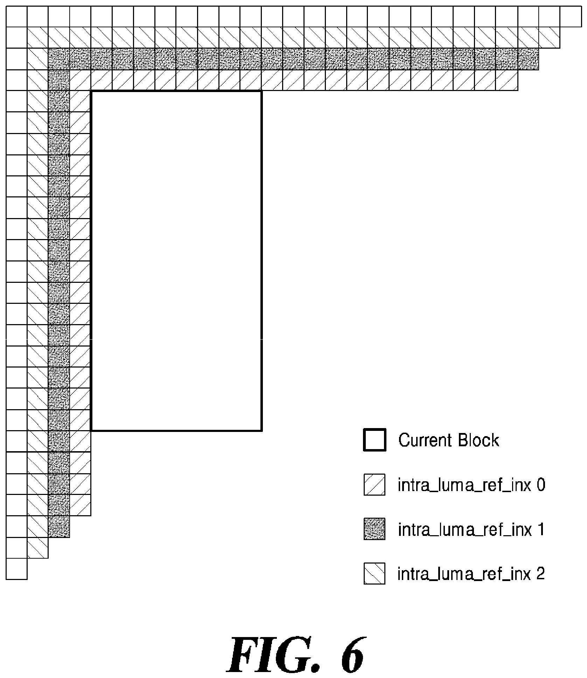

The video encoding device may consider whether to use additional reference lines by applying the MRL for the intra-prediction modes that are signaled according to the MPM, except for Planar. The reference line represented by each intra_luma_ref_idx is as illustrated in FIG. 6. In the Versatile Video Coding (VVC) technique, the video encoding device selects one of the three reference lines that are closer in distance to the current block to be used for the intra prediction of the current block. Table 2 shows the syntax associated with signaling the reference line index of intra_luma_ref_idx used for prediction and the prediction mode of the current block.

[Table 2]

| } else { |
|---|
| if( sps_mrl_enabled_flag && ( ( y0 % CtbSizeY ) > 0 ) ) |
| **intra_luma_ref_idx** |
| if( sps_isp_enabled_flag && intra_luma_ref_idx = = 0 && ( cbWidth <= MaxTbSizeY && cbHeight <= MaxTbSizeY ) && ( cbWidth * cbHeight > MinTbSizeY * MinTbSizeY ) && !cu_act_enabled_flag ) |
| **intra_subpartitions_mode_flag** |
| if( intra_subpartitions_mode_flag = = 1 ) |
| **intra_subpartitions_split_flag** |
| if( intra_luma_ref_idx = = 0) |
| **intra_luma_mpm_flag**[ x0 ][ y0 ] |
| if( intra_luma_mpm_flag[ x0 ][ y0 ] ) { |
| if( intra_luma_ref_idx = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

First, the video encoding device parses intra_luma_ref_idx to determine the reference line index to use for prediction. Since the Intra Sub-Partitions (ISP) technique is applicable when the reference line index is 0, the video encoding device does not parse information related to ISP when the reference line index is non-zero.

The MRL technique and MPM mode may be combined as follows.

First, if intra_luma_ref_idx is 0, a flag, intra_luma_not_planar_flag, indicating whether the planar mode is to be used, may be signaled from the video encoding device to the video decoding device. If intra_luma_not_planar_flag is false, the intra-prediction mode may be set to planar mode, and if intra_luma_not_planar_flag is true, intra_luma_mpm_idx may be additionally signaled. If intra_luma_not_planar_flag is not present, intra_luma_not_planar_flag may be inferred to be 1.

Then, if intra_luma_ref_idx is non-zero, the planar mode is not used. Therefore, intra_luma_not_planar_flag is not sent and is assumed to be true. Additionally, since intra_luma_not_planar_flag is true, intra_luma_mpm_idx may be signaled.

On the other hand, current MRL techniques suffer from two issues.

The first issue is that both the top and left reference lines are indicated by using a single reference line index. When both the top and left reference lines are used for prediction, the optimal one of the top reference lines and the optimal one of the left reference lines may have different indices. The existing techniques that use the same index for the top and left reference lines regardless of the different indices can be inefficient. This can be especially true when both the top and left reference lines are used in the intra prediction. For example, this is the case with the intra-prediction modes that are greater than horizontal mode 18 and less than vertical mode 50 in the example of FIG. 3B. The first issue can be solved by using separate indices for the top and left reference lines.

The second issue is that all pixels in the current block share only one reference line. The selected single reference line may not be the optimal choice for all pixels in the current block. The second issue arises because conventional MRL techniques are designed to increase the number of candidate reference lines but do not take into account the ability of each pixel in the block to select the optimal reference line. This is especially true when the optimal reference line is different for each pixel in the block, regardless of the angular direction of the intra-prediction mode. This may also become more pronounced as the size of the block increases or if the aspect ratio is skewed to one side. The second issue may be addressed by using multiple reference lines in combination for prediction of the block or may be addressed by using different reference lines for different areas within the block.

Hereinafter, an approach to address the above issues is referred to as adaptive MRL (Multiple Reference Line). Examples for implementing adaptive MRLs include the following.

In the following description, to enable the application/nonapplication of the respective examples (of adaptive MRL), the video encoding device signals the sps_adaptive_mrl_enabled_flag to the video decoding device at a higher level, such as SPS. While prior art MRL techniques may refer to three reference lines, the video encoding device in the present disclosure can take into account other than three or multiple reference lines (e.g., N reference lines, where N is a natural number). Hereinafter, for convenience, the intra-prediction mode 18 in the horizontal direction is referred to as HOR_Idx and the intra-prediction mode 50 in the vertical direction is referred to as VER_Idx.

## II. Embodiments of MRL Improved

### <Example 1> Selecting the top and left reference lines separately

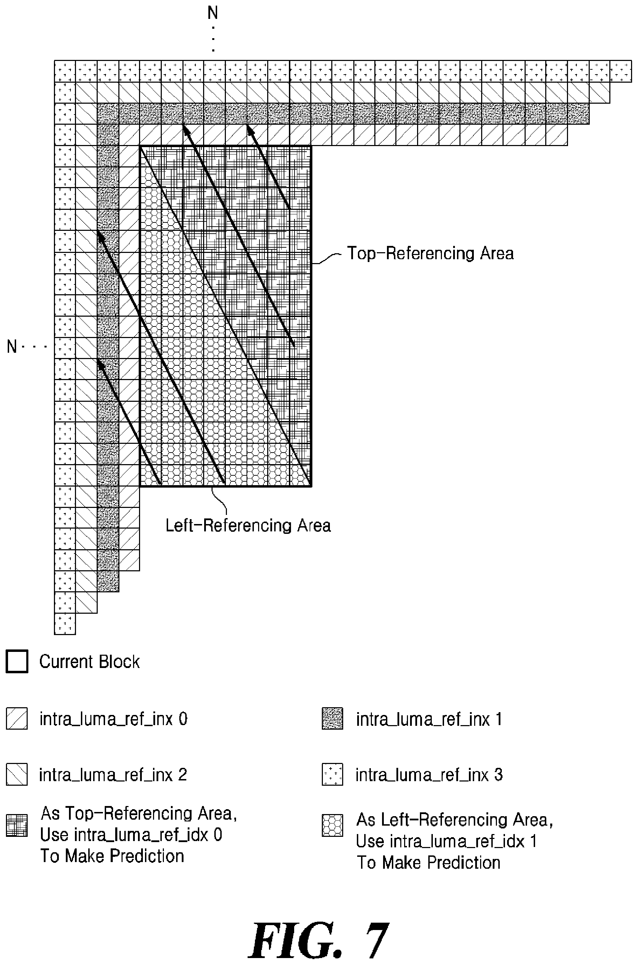

In this example, when using both the top and left reference lines in the prediction of the current block according to the direction of the intra-prediction mode, the video encoding device separately uses the top and left reference lines as illustrated in FIG. 7. It is generally convenient to direct the reference line with an index and then signal the index. Therefore, to effectively use this example, a method is needed for independently determining the top and left reference line indices.

Hereinafter, the "top-referencing area" refers to the area for making predictions based on the top reference line, and the "left-referencing area" refers to the area for making predictions based on the left reference line.

On the other hand, since the predictors are generated by using different reference line indices in the top-referencing area and the left-referencing area, discontinuities may occur at the boundary between the two areas. To address this, the video encoding device may further apply filters to the boundary between the two areas. For example, a filter may be applied to p pieces of pixels on the left side (or top side) of the boundary and to q pieces of pixels on the right side (or bottom side ) of the boundary. As a specific example, the video encoding device may utilize a block boundary smoothing filter, such as a [1 2 1] reference pixel filter.

In this example, the top and left reference line indices may be independently determined by deriving both of the top and left reference line indices (Example 1-1), signaling only one or the other (Example 1-2), or signaling both (Example 1-3).

### <Example 1-1> Deriving indices of both the top reference line and left reference line

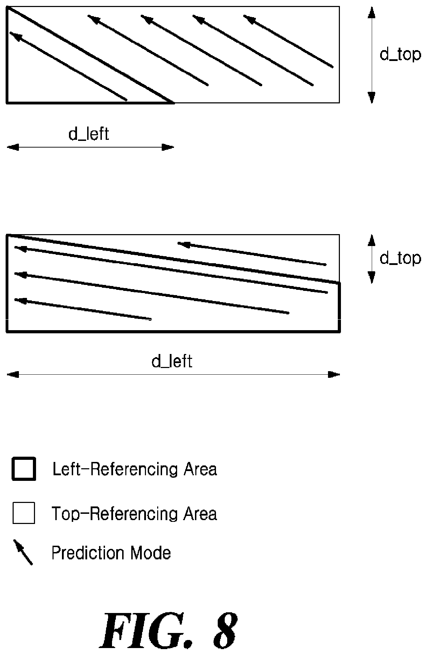

In this example, the video encoding device derives the respective reference line indices based on information on the current block to use the top and left reference lines separately. In one example, for a pixel in a block, the reference line index may be determined by considering the maximum distance from the block boundary adjacent to the reference line used for prediction. For example, for processing the top-referencing area, the video encoding device uses the maximum of distances between the relevant pixels and the block's top boundary to derive the top reference line index. In this case, the top maximum distance is designated as d_top. Similarly, for processing the left-referencing area, the video encoding device may use the maximum of the distances between the relevant pixels and the block's left boundary to derive the left reference line index. In this case, the left maximum distance is designated as d_left. The d_top and d_left according to the prediction mode may be illustrated in FIG. 8.

The video encoding device may determine reference line indices based on the top and left maximum distances (d_top, d_left). In one example, when d_top or d_left is referred to as a maximum distance d, the top or left reference line index may be determined as shown in Table 2.

[Table 3]

| Maximum Distance($d$) | $4 \leq d < 8$ | $8 \leq d < 16$ | $16 \leq d < 32$ | $32 \leq d \leq 64$ |
|---|---|---|---|---|
| Reference Line Index (intra_luma_ref_idx) | 3 | 2 | 1 | 0 |

The video encoding device may use relatively close reference line indices when d is large, and more distant reference line indices when d is small. Alternatively, various configurations of reference lines may be generated depending on d, such as using more distant reference lines for larger d. As another example, the video encoding device may determine the reference line index of the respective areas by referencing, in addition to the maximum distance from the block boundary, data of one or more of the width of the top-referencing area, the width of the left-referencing area, information about the current block, such as the current block's width/height/area/aspect ratio/prediction mode/pixel value/position, or information on neighboring blocks, e.g., whether to use this example, the used top and left reference lines by the neighboring blocks, the neighboring blocks' width/height/area/aspect ratio/prediction mode/pixel value/position.

The syntax elements required for this example are as follows.

The element adaptive_mrl_flag is a flag indicating whether adaptive MRL is to be applied and may have values of 0 and 1. If the flag is 0, the video encoding device uses intra_luma_ref_idx 0 for the top and left reference lines, and if the flag is 1, the video encoding device determines the left and top reference lines independently according to this example. If adaptive_mrl_flag is not present, adaptive_mrl_flag is inferred to be 0. Here, the roles of 0 and 1 may be reversed depending on examples, although the same roles of 0 and 1 as above apply to the following description.

Specific pseudo code according to this example may be realized as follows.

---

**Parse intra-prediction mode**

if (prediction mode using both top and left reference lines)

    **Parse a signal indicating whether to apply Adaptive MRL (adaptive_mrl_flag)**

---

According to the pseudo code described above, the syntax required for transmission is shown in Table 4.

[Table 4]

| |
|---|
| } else { |
| **intra_luma_mpm_flag**[ x0 ][ y0 ] |
| if( intra_luma_mpm_flag[ x0 ][ y0 ] ) { |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| *if( sps_adaptive_mrl_enabled_flag && ( ( y0 % CtbSizeY ) > 0 ) &&*<br>    *IntraPredModeY [ x0 ][ y0 ] < VER_Idx*<br>    *&& IntraPredModeY [ x0 ][ y0 ] > HOR_Idx*<br>    *&& intra_luma_mpm_flag[ x0 ][ y0 ) = = 1)* |
| *adaptive_mrl_flag* |
| if( sps_isp_enabled_flag && *adaptive_mrl_flag* = = 0 &&<br>    ( cbWidth <= MaxTbSizeY && cbHeight <= MaxTbSizeY ) &&<br>    ( cbWidth * cbHeight > MinTbSizeY * MinTbSizeY ) &&<br>    !cu_act_enabled_flag ) |
| **intra_subpartitions_mode_flag** |
| if( intra_subpartitions_mode_flag = = 1 ) |
| **intra_subpartitions_split_flag** |
| } |

A method of matching the syntax in Table 4 with the existing syntax composition is shown in Table 5. In Table 5, changes from the existing syntax composition are shown in italics.

[Table 5]

| |
|---|
| } else { |
| if( sps_adaptive_mrl_enabled_flag && (( y0 % CtbSizeY ) > 0 ) ) |

(continued)

| *adaptive_mrl_flag* |
| --- |
| if( sps_isp_enabled_flag && *adaptive_mrl_flag* = = 0 && <br>　( cbWidth <= MaxTbSizeY && cbHeight <= MaxTbSizeY ) && <br>　( cbWidth * cbHeight > MinTbSizeY * MinTbSizeY ) && <br>　!cu_act_enabled_flag ) |
| **intra_subpartitions_mode_flag** |
| if( intra_subpartitions_mode_flag = = 1 ) |
| **intra_subpartitions_split_flag** |
| if( *adaptive_mrl_flag* = = 0 ) |
| **intra_luma_mpm_flag**[ x0 ][ y0 ] |
| if( intra_luma_mpm_flag[ x0 ][ y0 ] ) { |
| if( *adaptive_mrl_flag* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

<Example 1-2> Signaling one of the top reference line index or the left reference line index and deriving the other

In this example, to use the top and left reference lines separately, the video encoding device signals one of the top reference line index or the left reference line index and derives the other based on information on the current block or information on a neighboring block. The signaled index of the top and left reference line indices may be signaled toward a predefined direction, or the predefined direction may be signaled. When signaling the predefined-directional reference line indices, the video encoding device signals one of the top-wise reference line index or the left-wise reference line index commonly for all CUs and derives the remaining differently directed reference line index according to Example 1-1. When additionally signaling the direction in which to transmit the reference line index, the video encoding device signals adaptive mrl_side idx to determine the signaling direction of the reference line index.

At this point, when a neighboring block (take at least one of the top block or the left block) uses adaptive MRL, the video encoding device may use the direction for signaling the reference line index as a basis for determining a direction for signaling the reference line index of the current block and thus may reduce the bits required to transmit adaptive mrl_side idx. For example, if the left block is using adaptive MRL and signaling is needed for the top reference line index, the video encoding device may signal the top reference line index for the current block and may omit the transmission of adaptive_mrl_side_idx. On the other hand, if the left block does not use adaptive MRL, the video encoding device may transmit adaptive mrl_side idx for the current block to determine the signaling direction of the reference line index.

As another example, the top block may be utilized in place of the left block to determine the direction to signal the reference line index, or the left and top blocks may be taken sequentially (or vice versa) to determine the direction to signal the reference line index.

The video encoding device uses the direction signal to determine one of the top-wise reference line index or the left-wise reference line index and then may derive the remaining differently directed reference line index. At this time, the remaining differently directed reference line index may be derived by referencing information on the current block or information on a neighboring block according to Example 1-1.

The following syntax elements are required for this example. One or more of these syntax elements may be used.

The element adaptive_mrl_flag is a flag indicating whether adaptive MRL is to be applied and may have values of 0 and 1. If the flag is 0, the video encoding device uses intra_luma_ref_idx 0 for the top and left reference lines. If the flag is 1, the video encoding device signals adaptive mrl_side idx and intra_luma_ref_idx to determine the left and top reference lines independently according to this example. If adaptive_mrl_flag is not present, adaptive_mrl_flag is inferred to be 0.

The element adaptive mrl_side idx indicates to which one of the top direction or the left direction the reference line index is to be signaled. If the adaptive mrl_side idx is 0, the video encoding device signals the top reference line index and derives the left reference line index. If the adaptive mrl_side idx is 1, the video encoding device signals the left reference line index and derives the top reference line index. If the video encoding device signals the predefined-directional reference line index, adaptive mrl_side idx is not transmitted.

intra_luma_ref_idx represents the reference line index in the predefined direction or the direction being signaled and may have a value of 0 or greater.

Specific pseudo code according to this example may be realized as follows.

---

**Parse intra-prediction mode**

if (prediction mode using both top and left reference lines)

    **Parse a signal indicating whether to apply Adaptive MRL (adaptive_mrl_flag)**

if (Adaptive MRL applied)

    **Parse the signaling direction of the reference line index (adaptive_mrl_side_idx)**

    **Parse the reference line index in the direction being signaled (intra_luma_ref_idx)**

---

The above pseudo code indicates the case where the signaling direction of the reference line index is determined by the transmission of adaptive mrl_side idx. If the predefined-directional reference line index is transmitted, adaptive mrl_side idx is not transmitted.

The syntax, according to the pseudo code described above, required for transmission is shown in Table 6.

[Table 6]

| |
|---|
| } else { |
|    **intra_luma_mpm_flag**[ x0 ][ y0 ] |
|    ... |
|    *if( sps_adaptive_mrl_enabled_flag && ( ( y0 % CtbSizeY) > 0 ) &&*<br>      *IntraPredModeY [ x0 ][ y0 ] < VER_Idx*<br>      *&& IntraPredModeY [ x0 ][ y0 ] > HOR_Idx*<br>      *&& intra_luma_mpm_flag[ x0 ][ y0 ) = = 1)* |
|    **adaptive_mrl_flag** |
|    *if( adaptive_mrl_flag = = 1 )* |
|    **adaptive_mrl_side_idx** |
|    **intra_luma_ref_idx** |
|    if( sps_isp_enabled_flag && *adaptive_mrl_flag* = = 0 &&<br>      ( cbWidth <= MaxTbSizeY && cbHeight <= MaxTbSizeY ) &&<br>      ( cbWidth * cbHeight > MinTbSizeY * MinTbSizeY ) &&<br>      !cu_act_enabled_flag ) |
|    **intra_subpartitions_mode_flag** |
|    if( intra_subpartitions_mode_flag = = 1 ) |
|    **intra_subpartitions_split_flag** |
|    } |

A method of matching the syntax in Table 6 with the existing syntax composition is shown in Table 7.

[Table 7]

| |
|---|
| } else { |
| if( sps_adaptive_mrl_enabled_flag && (( y0 % CtbSizeY ) > 0 ) ) |
| *adaptive_mrl_flag* |
| if( *adaptive_mrl_flag* = = 1 ) |
| *adaptive_mrl_side_idx* |
| *intra_luma_ref_idx* |
| if( sps_isp_enabled_flag && *adaptive_mrl_flag* = = 0 && <br>    ( cbWidth <= MaxTbSizeY && cbHeight <= MaxTbSizeY ) && <br>    ( cbWidth * cbHeight > MinTbSizeY * MinTbSizeY ) && <br>    !cu_act_enabled_flag ) |
| **intra_subpartitions_mode_flag** |
| if( intra_subpartitions_mode_flag = = 1 ) |
| **intra_subpartitions_split_flag** |
| if( *adaptive_mrl_flag* = = 0 ) |
| **intra_luma_mpm_flag**[ x0 ][ y0 ] |
| if( intra_luma_mpm_flag[ x0 ][ y0 ] ) { |
| if( *adaptive_mrl_flag* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

In Table 7, adaptive_mrl_flag and intra_luma_ref_idx are used. In place of these two syntax elements, adaptive_intra_luma_ref_idx may be used.

The element adaptive_intra_luma_ref_idx indicates whether this example is to be applied, and indicates whether the reference line index in the direction is signaled, and the element adaptive_intra_luma_ref_idx may have a value equal to or greater than 0. If this index is 0, the video encoding device will not apply this example and will use intra_luma_ref_idx 0 for the top and left reference lines. If this index is equal to or greater than 1, to determine the left and top reference lines independently according to this example, the video encoding device indicates the reference line index that is toward the predefined direction or a direction determined by adaptive_mrl_side_idx, as 'adaptive_intra_luma_ref_idx - 1'. Namely, the actually signaled reference line index used for prediction has a value equal to or greater than 0. If adaptive_intra_luma_ref_idx is not present, it is inferred to be 0.

By utilizing adaptive_intra_luma_ref_idx, Table 7 above may be replaced by Table 8.

[Table 8]

| |
|---|
| } else { |
| if( sps_adaptive_mrl_enabled_flag && (( y0 % CtbSizeY ) > 0 ) ) |
| *adaptive_intra_luma_ref_idx* |
| *adaptive_mrl_side_idx* |
| if( sps_isp_enabled_flag && *adaptive_intra_luma_ref_idx* = = 0 && <br>    ( cbWidth <= MaxTbSizeY && cbHeight <= MaxTbSizeY ) && <br>    ( cbWidth * cbHeight > MinTbSizeY * MinTbSizeY ) && |

(continued)

| |
|---|
| !cu_act_enabled_flag ) |
| **intra_subpartitions_mode_flag** |
| if( intra_subpartitions_mode_flag = = 1 ) |
| **intra_subpartitions_split_flag** |
| if( *adaptive_intra_luma_ref_idx* = = 0 ) |
| **intra_luma_mpm_flag**[ x0 ][ y0 ] |
| if( intra_luma_mpm_flag[ x0 ][ y0 ] ) { |
| if( *adaptive_intra_luma_ref_idx* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

<Example 1-3> Signaling both top and left reference line indices

In this example, for separate use of top and left reference lines, the video encoding device signals both the top and left reference line indices. To signal both indices, the present disclosure may utilize the method of signaling each of the top reference line index and the left reference line index (Example 1-3-1), the method of signaling one reference line index and an index difference value based on the one reference line index (Example 1-3-2), or the method of signaling reference line set indices (Example 1-3-3).

<Example 1-3-1> Signaling each of the top and left reference line indices

In this example, the video encoding device signals intra_luma_ref_idx_T and intra_luma_ref_idx_L representing the top and left reference line indices. For example, when using intra_luma_ref_idx 2, which is two pixels away from the current block, as the top reference line, and using intra_luma_ref_idx 3, which is three pixels away from the current block, as the left reference line, the video encoding device may signal the intra_luma_ref_idx_T for the 2 and the intra_luma_ref_idx_L for the 3.

The following syntax elements are required for this example. One or more of these syntax elements may be used.

The element adaptive_mrl_flag is a flag indicating whether adaptive MRL is to be applied and may have values of 0 and 1. The video encoding device uses intra_luma_ref_idx 0 for the top and left reference lines if the flag is 0. If the flag is 1, the video encoding device determines the left and top reference lines independently according to this example. If adaptive_mrl_flag is not present, adaptive_mrl_flag is inferred to be 0.

The element intra_luma_ref_idx_T indicates the top reference line index and may have a value equal to or greater than 0.

The element intra_luma_ref_idx_L indicates the left reference line index and may have a value equal to or greater than 0.

Specific pseudo code according to this example may be realized as follows.

> **Parse intra-prediction mode**
>
> if (prediction mode using both top and left reference lines)
>
> > **Parse a signal indicating whether to apply Adaptive MRL (adaptive_mrl_flag)**
>
> if (Adaptive MRL applied)
>
> > **Parse the top reference line index (intra_luma_ref_idx_T)**
> >
> > **Parse the left reference line index (intra_luma_ref_idx_L)**

The above pseudo code represents the case where the top reference line index is parsed first.

The syntax according to the above pseudo code, and required for transmission is shown in Table 9.

[Table 9]

| |
|---|
| } else { |
| **intra_luma_mpm_flag**[ x0 ][ y0 ] |
| ... |
| if( sps_adaptive_mrl_enabled_flag && ( ( y0 % CtbSizeY ) > 0 ) &&     IntraPredModeY [ x0 ][ y0 ] < VER_Idx     && IntraPredModeY [ x0 ][ y0 ] > HOR_Idx     && intra_luma_mpm_flag[ x0 ][ y0 ) = = 1) |
| **adaptive_mrl_flag** |
| if( adaptive_mrl_flag = = 1 ) { |
| **intra_luma_ref_idx_T** |
| **intra_luma_ref_idx_L** |
| } |
| if( sps_isp_enabled_flag && adaptive_mrl_flag = = 0 &&    ( cbWidth <= MaxTbSizeY && cbHeight <= MaxTbSizeY ) &&    ( cbWidth * cbHeight > MinTbSizeY * MinTbSizeY ) &&    !cu_act_enabled_flag ) |
| **intra_subpartitions_mode_flag** |
| if( intra_subpartitions_mode_flag = = 1 ) |
| **intra_subpartitions_split_flag** |
| } |

The method of matching the syntax in Table 9 with an existing syntax composition is shown in Table 10.

[Table 10]

| |
|---|
| } else { |
| if( sps_adaptive_mrl_enabled_flag && (( y0 % CtbSizeY ) > 0 ) ) |
| **adaptive_mrl_flag** |
| if( adaptive_mrl_flag = = 1 ) { |
| **intra_luma_ref_idx_T** |
| **intra_luma_ref_idx_L** |
| } |
| if( sps_isp_enabled_flag && adaptive_mrl_flag = = 0 && |

(continued)

| |
|---|
| ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) |
| **intra_subpartitions_mode_flag** |
| if( intra_subpartitions_mode_flag = = 1 ) |
| **intra_subpartitions_split_flag** |
| if( *adaptive_mrl_flag* = = 0 ) |
| **intra_luma_mpm_flag**[ x0 ][ y0 ] |
| if( intra_luma_mpm_flag[ x0 ][ y0 ] ) { |
| if( *adaptive_mrl_flag* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

In Table 10, adaptive_mrl_flag, intra_luma_ref_idx_L, and intra_luma_ref_idx_T are used. In place of these three syntax elements, adaptive_intra_luma_ref_idx may be used.

The element adaptive_intra_luma_ref_idx indicates whether this example is to be applied, indicates a preset-directional reference line index, and may have a value equal to or greater than 0. If this index is 0, the video encoding device will not apply this example and will use intra_luma_ref_idx 0 for the top and left reference lines. If this index is equal to or greater than 1, the video encoding device indicates the predefined top reference line index or the left reference line index as 'adaptive_intra_luma_ref_idx - 1'. Namely, the reference line index used for the actual prediction has a value equal to or greater than 0. If adaptive_intra_luma_ref_idx is not present, adaptive_intra_luma_ref_idx is inferred to be 0.

By utilizing adaptive_intra_luma_ref_idx, Table 10 above may be replaced by Table 11. In Table 11, adaptive_intra_luma_ref_idx indicates information on the top reference line. If this index represents information on the left reference line, intra_luma_ref_idx_T may be signaled in place of intra_luma_ref_idx_L.

[Table 11]

| |
|---|
| } else { |
| if( sps_adaptive_mrl_enabled_flag && (( y0 % CtbSizeY ) > 0 ) ) |
| ***adaptive_intra_luma_ref_idx*** |
| if( *adaptive_intra_luma_ref_idx* ! = 0 ) |
| ***intra_luma_ref_idx_L*** |
| if( sps_isp_enabled_flag && *adaptive_intra_luma_ref_idx* = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) |
| **intra_subpartitions_mode_flag** |
| if( intra_subpartitions_mode_flag = = 1 ) |
| **intra_subpartitions_split_flag** |
| if( *adaptive_intra_luma_ref_idx* = = 0 ) |

(continued)

| |
|---|
| **intra_luma_mpm_flag**[ x0 ][ y0 ] |
| if( intra_luma_mpm_flag[ x0 ][ y0 ] ) { |
| if( *adaptive_intra_luma_ref_idx* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

On the other hand, this example may be somewhat inefficient, as this example may signal the same value repeatedly even when the top and left reference line indices have the same or similar values. An improved example of this issue is as follows.

<Example 1-3-2> Signaling a single reference line index, and an index difference value based on the same

In this example, the video encoding device signals one of the top reference line index or the left reference line index and a difference value between that reference line index and the other reference line index. The signaled index between the top and left reference line indices may be based on a prior arrangement between the video encoding device and the video decoding device, or a direction may be signaled. For example, when signaling the top reference line index, the video encoding device may signal the top reference line index as intra_luma_ref_idx, and may signal, for the left reference line index, a difference value thereof from the top reference line index. The difference is expressed by a sign (+ or -) of intra_luma_ref_idx_diff_sign and by an absolute value of intra_luma_ref_idx_diff. The element intra_luma_ref_induced_idx is the reference line index induced from the difference value, and it is expressed as shown in Equation 1 by using the signaled reference line index and the index difference value.

【Equation 1】

$$intra\_luma\_ref\_induced\_idx = \begin{cases} intra\_luma\_ref\_idx - \ intra\_luma\_ref\_idx\_diff \\ (intra\_luma\_ref\_idx\_diff\_sign \ = 0) \\ intra\_luma\_ref\_idx + \ intra\_luma\_ref\_idx\_diff \\ (intra\_luma\_ref\_idx\_diff\_sign \ = 1) \end{cases}$$

When signaling the top reference line index, intra_luma_ref_induced_idx may mean intra_luma_ref_idx_L, which represents the left reference line index. For example, it is supposed that intra_luma_ref_idx 2 is used for the top reference line and intra_luma_ref_idx 3 is used for the left reference line. If the index difference value is determined based on the top reference line index, the video encoding device signals intra_luma_ref_idx_diff_sign as 1 and signals intra_luma_ref_idx_diff as 1. Thus, the top reference line index may be determined to be 2 based on the signaled intra_luma_ref_idx, and the left reference line index may be determined to be 3 based on Equation 1.

The following syntax elements are required for this example. One or more of these syntax elements may be used.

The element adaptive_mrl_flag is a flag indicating whether adaptive MRL is to be applied and may have values of 0 and 1. If the flag is 0, the video encoding device uses intra_luma_ref_idx 0 for the top and left reference lines. If the flag is 1, the video encoding device determines the left and top reference lines independently according to this example. If adaptive_mrl_flag is not present, adaptive_mrl_flag is inferred to be 0.

The element intra_luma_ref_idx indicates the preset-directional reference line index and may have a value equal to or greater than 0.

The element intra_luma_ref_idx_diff represents the absolute value of the difference between the two directional reference line indices and may have an integer value equal to or greater than 0. If this value is 0, intra_luma_ref_idx_diff_sign is not signaled.

The element intra_luma_ref_idx_diff_sign indicates the sign of the difference between the two directional reference line indices and may be 0 to indicate that the difference is negative or 1 to indicate that the difference is positive.

Specific pseudo code according to this example may be realized as follows.

| Parse intra-prediction mode |
|---|
| if (prediction mode using both top and left reference lines) |
| **Parse a signal indicating whether to apply Adaptive MRL (adaptive_mrl_flag)** |
| if (Adaptive MRL applied) |
| **Parse the reference line index in the direction being signaled (intra_luma_ref_idx)** |
| **Parse the absolute value of the difference value of the reference line index (intra_luma_ref_idx_diff)** |
| **Parse the sign of the difference value of the reference line index (intra_luma_ref_idx_diff_sign)** |

The syntax, according to the pseudo code described above, required for transmission is shown in Table 12.

[Table 12]

| |
|---|
| } else { |
| **intra_luma_mpm_flag**[ x0 ][ y0 ] |
| ... |
| *if( sps_adaptive_mrl_enabled_flag && ( ( y0 % CtbSizeY) > 0 ) &&*<br>    *IntraPredModeY [ x0 ][ y0 ] < VER_Idx*<br>    *&& IntraPredModeY [ x0 ][ y0 ] > HOR_Idx*<br>    *&& intra_luma_mpm_flag[ x0 ][ y0 ) = = 1)* |
| ***adaptive_mrl_flag*** |
| *if( adaptive_mrl_flag = = 1 ) {* |
| **intra_luma_ref_idx** |
| intra_luma_ref_idx_diff |
| *If(intra_luma_ref_idx_diff != 0)* |
| ***intra_luma_ref_idx_diff_sign*** |
| *}* |
| if( sps_isp_enabled_flag && *adaptive_mrl_flag* = = 0 &&<br>    ( cbWidth <= MaxTbSizeY && cbHeight <= MaxTbSizeY ) &&<br>    ( cbWidth * cbHeight > MinTbSizeY * MinTbSizeY ) &&<br>    !cu_act_enabled_flag ) |
| **intra_subpartitions_mode_flag** |
| if( intra_subpartitions_mode_flag = = 1 ) |
| **intra_subpartitions_split_flag** |
| } |

The method of matching the syntax in Table 12 with an existing syntax composition is shown in Table 13.

[Table 13]

| |
|---|
| } else { |
| if( sps_adaptive_mrl_enabled_flag && (( y0 % CtbSizeY ) > 0 ) ) |
| ***adaptive_mrl_flag*** |

(continued)

| |
|---|
| *if( adaptive_mrl_flag = = 1 ) {* |
| **intra_luma_ref_idx** |
| **intra_luma_ref_idx_diff** |
| **intra_luma_ref_idx_diff_sign** |
| *}* |
| if( sps_isp_enabled_flag && *adaptive_mrl_flag* = = 0 && <br>  ( cbWidth <= MaxTbSizeY && cbHeight <= MaxTbSizeY ) && <br>  ( cbWidth * cbHeight > MinTbSizeY * MinTbSizeY ) && <br>  !cu_act_enabled_flag ) |
| **intra_subpartitions_mode_flag** |
| if( intra_subpartitions_mode_flag = = 1 ) |
| **intra_subpartitions_split_flag** |
| if( *adaptive_mrl_flag* = = 0 ) |
| **intra_luma_mpm_flag**[ x0 ][ y0 ] |
| if( intra_luma_mpm_flag[ x0 ][ y0 ] ) { |
| if( *adaptive_mrl_flag* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

In Table 13, adaptive_mrl_flag and intra_luma_ref_idx are used. In place of these two syntax elements, adaptive_intra_luma_ref_idx may be used.

The element adaptive_intra_luma_ref_idx indicates whether this example is to be applied, indicates a preset-directional reference line index, and may have a value equal to or greater than 0. If this index is 0, the video encoding device will not apply this example and will use intra_luma_ref_idx 0 for the top and left reference lines. If this index is equal to or greater than 1, the video encoding device indicates the preset top reference line index or the left reference line index as 'adaptive_intra_luma_ref_idx - 1'. Namely, the reference line index used for the actual prediction has a value equal to or greater than 0. If adaptive_intra_luma_ref_idx is not present, adaptive_intra_luma_ref_idx is inferred to be 0.

Table 13 above may be replaced with Table 14 by using adaptive_intra_luma_ref_idx.

[Table 14]

| |
|---|
| } else { |
| if( sps_adaptive_mrl_enabled_flag && (( y0 % CtbSizeY ) > 0 ) ) |
| *adaptive intra_luma_ref_idx* |
| *if( adaptive_intra_luma_ref_idx != 0 ) {* |
| **intra_luma_ref_idx_diff** |
| **intra_luma_ref_idx_diff_sign** |
| *}* |
| if( sps_isp_enabled_flag && *adaptive_intra_luma_ref_idx* = = 0 && |

(continued)

| |
|---|
| ( cbWidth <= MaxTbSizeY && cbHeight <= MaxTbSizeY ) &&<br>( cbWidth * cbHeight > MinTbSizeY * MinTbSizeY ) &&<br>!cu_act_enabled_flag ) |
| **intra_subpartitions_mode_flag** |
| if( intra_subpartitions_mode_flag = = 1 ) |
| **intra_subpartitions_split_flag** |
| if( *adaptive_intra_luma_ref_idx* = = 0 ) |
| **intra_luma_mpm_flag**[ x0 ][ y0 ] |
| if( intra_luma_mpm_flag[ x0 ][ y0 ] ) { |
| if( *adaptive_intra_luma_ref_idx* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

<Example 1-3-3> Signaling reference line set index

In this example, the video encoding device composes a list of reference line sets and signals an index indicating a reference line set selected from the list. The reference line set is organized as a pair of (intra_luma_ref_idx_T, intra_luma_ref_idx_L), and the reference line set index indicating the reference line set is represented by ref_set_idx.

The video encoding device may compose the reference line-set list according to a preset method. As one example, the video encoding device may always compose the reference line-set list as {(1,0), (2,0), (2,1), ...} regardless of the current block. As another example, the video encoding device may organize the reference line-set list according to the information on the current block. As shown in Example 1-1, the reference line-set list may be composed by considering the maximum distance between pixels in the block and block boundary adjacent to the reference line. For the values of the top and left maximum distances d_top and d_left as illustrated in FIG. 8, the reference line-set list may be composed as shown in Table 15.

[Table 15]

| d_top, d_left | Reference Line-Set List |
|---|---|
| 4 ≤ d_top < 16, 4 ≤ d_left < 16 | {(3, 3), (3, 2), (2, 3), (2, 2), (**1, 2**), ...} |
| 16 ≤ d_top < 32, 4 ≤ d_left < 16 | {(2, 3), (2, 2), (1, 3), (1, 2), (1, 1), ...} |
| ⋮ | ⋮ |

For example, it is assumed that d_top is 15 and d_left is 8, signaling 4 as the set index ref_set_idx for the reference line-set list according to Table 15. In this case, intra_luma_ref_idx 1 may be used for the top reference line, and intra_luma_ref_idx 2 may be used for the left reference line.

The following syntax elements are required for this example. One or more of these syntax elements may be used.

The element adaptive_mrl_flag is a flag indicating whether adaptive MRL is to be applied and may have values of 0 and 1. The video encoding device uses intra_luma_ref_idx 0 for the top and left reference lines if the flag is 0, and if the flag is 1, the video encoding device determines the left and top reference lines independently according to this example. If adaptive_mrl_flag is not present, adaptive_mrl_flag is inferred to be 0.

The element ref_set_idx indicates the selected set from the reference line-set list and may have a value equal to or greater than 0.

Specific pseudo code according to this example may be realized as follows.

> **Parse intra-prediction mode**
> if (prediction mode using both top and left reference lines)
>     **Parse a signal indicating whether to apply Adaptive MRL (adaptive_mrl_flag)**
> if (Adaptive MRL applied)
>     **Parse the selected set index from the reference line-set list (ref_set_idx)**

The syntax, according to the pseudo code described above, required for transmission is shown in Table 16.

[Table 16]

| |
|---|
| } else { |
| **intra_luma_mpm_flag**[ x0 ][ y0 ] |
| ... |
| *if( sps_adaptive_mrl_enabled_flag && ( ( y0 % CtbSizeY) > 0 ) &&*<br>    *IntraPredModeY [ x0 ][ y0 ] < VER_Idx*<br>    *& & IntraPredModeY [ x0 ][ y0 ] > HOR_Idx*<br>    *&& intra_luma_mpm_flag[ x0 ][ y0 ) = = 1)* |
| ***adaptive_mrl_flag*** |
| *if( adaptive_mrl_flag = = 1 )* |
| ref_set_idx |
| if( sps_isp_enabled_flag && *adaptive_mrl_flag* = = 0 &&<br>    ( cbWidth <= MaxTbSizeY && cbHeight <= MaxTbSizeY ) &&<br>    ( cbWidth * cbHeight > MinTbSizeY * MinTbSizeY ) &&<br>    !cu_act_enabled_flag ) |
| **intra_subpartitions_mode_flag** |
| if( intra_subpartitions_mode_flag = = 1 ) |
| **intra_subpartitions_split_flag** |
| } |

A method of matching the syntax of Table 16 with an existing syntax composition is shown in Table 17.

[Table 17]

| |
|---|
| } else { |
| if( sps_adaptive_mrl_enabled_flag && (( y0 % CtbSizeY ) > 0 ) ) |
| ***adaptive_mrl_flag*** |
| *if( adaptive_mrl_flag = = 1 )* |
| ***ref_set_idx*** |
| if( sps_isp_enabled_flag && *adaptive_mrl_flag* = = 0 &&<br>    ( cbWidth <= MaxTbSizeY && cbHeight <= MaxTbSizeY ) &&<br>    ( cbWidth * cbHeight > MinTbSizeY * MinTbSizeY ) &&<br>    !cu_act_enabled_flag ) |
| **intra_subpartitions_mode_flag** |
| if( intra_subpartitions_mode_flag = = 1 ) |
| **intra_subpartitions_split_flag** |

(continued)

| |
|---|
| if( *adaptive_mrl_flag* = = 0 ) |
| **intra_luma_mpm_flag**[ x0 ][ y0 ] |
| if( intra_luma_mpm_flag[ x0 ][ y0 ] ) { |
| if( *adaptive_mrl_flag* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

In Table 17, adaptive_mrl_flag and ref_set_idx are used. In place of these two syntax elements, adaptive_ref_set_idx may be used.

The element adaptive_ref_set_idx indicates whether this example is applicable, indicates the set of reference lines, and may have a value equal to or greater than 0. If this index is 0, the video encoding device does not apply this example and uses intra_luma_ref_idx 0 for the top and left reference lines. If this index is equal to or greater than 1, the video encoding device indicates the selected set of the reference line-set list as 'adaptive_ref_set_idx - 1'. Namely, each set in the reference line-set list has an index equal to or greater than 0. If adaptive_ref_set_idx is not present, adaptive_ref_set_idx is inferred to be 0.

With adaptive_ref_set_idx used, Table 17 above may be replaced by Table 18.

[Table 18]

| |
|---|
| } else { |
| if( sps_adaptive_mrl_enabled_flag && (( y0 % CtbSizeY ) > 0 ) ) |
| ***adaptive_ref_set_idx*** |
| if( sps_isp_enabled_flag && *adaptive_ref_set_idx* = = 0 && <br>    ( cbWidth <= MaxTbSizeY && cbHeight <= MaxTbSizeY ) && <br>    ( cbWidth * cbHeight > MinTbSizeY * MinTbSizeY ) && <br>    !cu_act_enabled_flag ) |
| **intra_subpartitions_mode_flag** |
| if( intra_subpartitions_mode_flag = = 1 ) |
| **intra_subpartitions_split_flag** |
| if( *adaptive_ref_set_idx* = = 0 ) |
| **intra_luma_mpm_flag**[ x0 ][ y0 ] |
| if( intra_luma_mpm_flag[ x0 ][ y0 ] ) { |
| if( *adaptive_ref_set_idx* = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

<Example 2> Using multiple reference lines combined

In this example, the video encoding device combines multiple reference lines to generate a predictor of the current block. For example, the video encoding device may generate multiple predictors by using the multiple reference lines and then may weighted-combine the plurality of predictors to generate a final predictor, as shown in Equation 2.

【Equation 2】

$$pred = \omega_0 \times pred_{ref\ 0} + \omega_1 \times pred_{ref\ 1} + \cdots + \omega_n \times pred_{ref\ n}$$

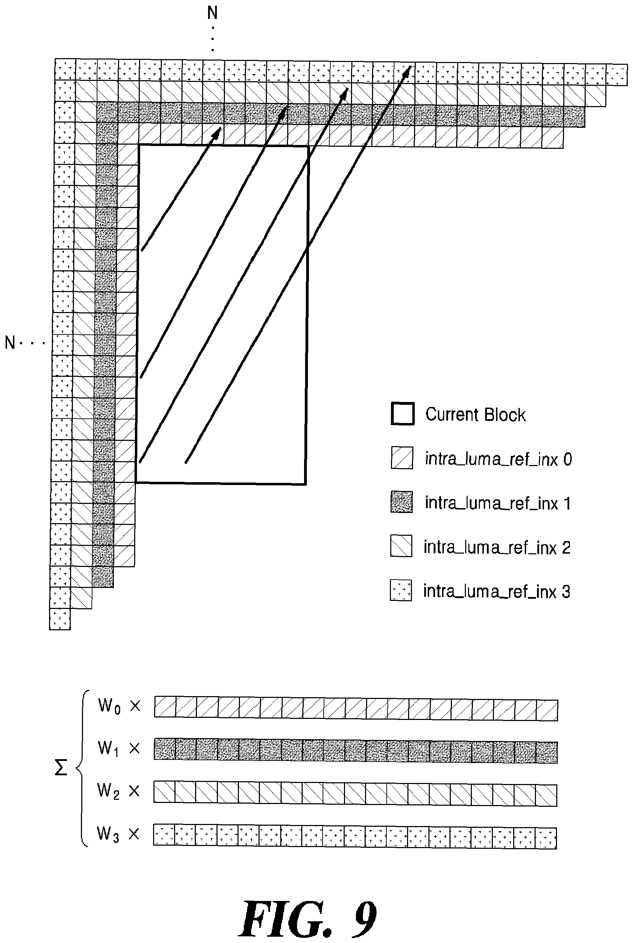

Here, $pred_{ref\ i}$ represents a predictor generated by using intra_luma_ref_idx i, and the sum of the weights of each predictor satisfies 1 ($\omega_0 + \omega_1 + ... + \omega_n = 1$, where each weight value may be 0). In one example, when n is 3, the final predictor may be generated as illustrated in FIG. 9.
To weighted-combine the plurality of predictors, the video encoding device determines the reference lines used to generate the predictors (Example 2-1) and the weights of the respective predictors (Example 2-2). The respective detailed methods are as follows.

<Example 2-1> Determining multiple reference lines

In this example, the video encoding device determines multiple reference lines that are used to generate the plurality of predictors. To determine the multiple reference lines, this example may use a method of using predefined multiple reference lines (Example 2-1-1), a method of using predefined multiple reference lines based on information on the current block (Example 2-1-2), or a method of signaling the multiple reference lines (Example 2-1-3).

<Example 2-1-1> Using predefined multiple reference lines

In this example, the video encoding device uses predefined multiple reference lines. For example, when the video encoding device utilizes three reference lines of intra_luma_ref_idx 0, intra_luma_ref_idx 1, and intra_luma_ref_idx 2, a final predictor may be generated as shown in Equation 3.

【Equation 3】

$$pred = \omega_0 \times pred_{ref\ 0} + \omega_1 \times pred_{ref\ 1} + \omega_2 \times pred_{ref\ 2}$$

The syntax elements required for this example are as follows.
The element adaptive_mrl_flag is a flag indicating whether adaptive MRL is to be applied and may have values of 0 and 1. If the flag is 0, the video encoding device uses intra_luma_ref_idx 0 as a single reference line, and if the flag is 1, the video encoding device determines multiple reference lines according to this example. If adaptive_mrl_flag is not present, adaptive_mrl_flag is inferred to be 0.
Specific pseudo code according to this example may be realized as follows. In this case, either the intra-prediction mode or the flag indicating whether adaptive MRL is to be applied may be parsed first.

| |
|---|
| **Parse intra-prediction mode** |
| **Parse the signal indicating whether to apply Adaptive MRL (adaptive_mrl_flag)** |

The syntax, according to the pseudo code described above, required for transmission is shown in Table 19.

[Table 19]

| |
|---|
| } else { |
| **intra_luma_mpm_flag**[ x0 ][ y0 ] |

(continued)

| |
|---|
| ... |
| if( sps_adaptive_mrl_enabled_flag && ( ( y0 % CtbSizeY) > 0 ) ) |
| **adaptive_mrl_flag** |
| if( sps_isp_enabled_flag && adaptive_mrl_flag = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) |
| **intra_subpartitions_mode_flag** |
| if( intra_subpartitions_mode_flag = = 1 ) |
| **intra_subpartitions_split_flag** |
| } |

A method of matching the syntax in Table 19 with the existing syntax composition is shown in Table 20.

[Table 201]

| |
|---|
| } else { |
| if( sps_adaptive_mrl_enabled_flag && (( y0 % CtbSizeY ) > 0 ) ) |
| **adaptive_mrl_flag** |
| if( sps_isp_enabled_flag && adaptive_mrl_flag = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) |
| **intra_subpartitions_mode_flag** |
| if( intra_subpartitions_mode_flag = = 1 ) |
| **intra_subpartitions_split_flag** |
| if( adaptive_mrl_flag = = 0 ) |
| **intra_luma_mpm_flag**[ x0 ][ y0 ] |
| if( intra_luma_mpm_flag[ x0 ][ y0 ] ) { |
| if( adaptive_mrl_flag = = 0 ) |
| **intra_luma_not_planar_flag**[ x0 ][ y0 ] |
| if( intra_luma_not_planar_flag[ x0 ][ y0 ] ) |
| **intra_luma_mpm_idx**[ x0 ][ y0 ] |
| } else |
| **intra_luma_mpm_remainder**[ x0 ][ y0 ] |
| } |

<Example 2-1-2> Using predefined multiple reference lines based on information on the current block

In this example, the video encoding device utilizes a predetermined number of reference lines based on the information of the current block. One example may take into account the distance from the reference line to its facing block side. For example, the block height is selected for prediction modes equal to or greater than vertical mode 50, which use the top reference line for prediction. The block width is selected for prediction modes equal to or less than horizontal mode 18, which use the left reference line for prediction. The greater of the block width and block height may be selected for prediction modes greater than horizontal mode 18 and less than vertical mode 50, which use both the top and left reference lines for prediction. The video encoding device determines the multiple reference lines based on the block width or block height. To improve prediction accuracy, the larger the block width or block height, the more reference lines may be used, as shown in Table 21.

[Table 21]

| Block Size (Width or Height) | Number of Reference Lines |
|---|---|
| 4 | One (intra_luma_ref_idx 0) |
| 8 or 16 | Two (intra_luma_ref_idx 0,1) |
| 32 or 64 | Three (intra_luma_ref_idx 1,2,3) |
| ⋮ | ⋮ |

Additionally, the smaller the block width or block height, the more reference lines may be used. As another example, the video encoding device may determine the multiple reference lines by referencing data of one or both of information about the current block, such as the current block's width, height, area, aspect ratio, prediction mode, pixel value, and position, or information on neighboring blocks, e.g., whether to use this example, the number of the used top and left reference lines by the neighboring blocks, the neighboring blocks' width/height/area/aspect ratio/prediction mode/pixel value/position.

The syntax elements required for this example are as follows.

The element adaptive_mrl_flag is a flag indicating whether adaptive MRL is to be applied and may have values of 0 and 1. The video encoding device uses intra_luma_ref_idx 0 as a single reference line if the flag is 0, and the video encoding device determines, if the flag is 1, multiple reference lines according to this example. If adaptive_mrl_flag is not present, adaptive_mrl_flag is inferred to be 0.

Specific pseudo code according to this example may be realized as follows. In this case, either the intra-prediction mode or the flag indicating whether adaptive MRL is to be applied may be parsed first.

> **Parse intra-prediction mode**
>
> **Parse the signal indicating whether to apply Adaptive MRL (adaptive_mrl_flag)**

The syntax, according to the pseudo code described above, required for transmission is shown in Table 22.

[Table 22]

| |
|---|
| } else { |
| **intra_luma_mpm_flag**[ x0 ][ y0 ] |
| ... |
| *if( sps_adaptive_mrl_enabled_flag && ( ( y0 % CtbSizeY) > 0 ) )* |
| ***adaptive_mrl_flag*** |
| if( sps_isp_enabled_flag && *adaptive_mrl_flag* = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) |
| **intra_subpartitions_mode_flag** |
| if( intra_subpartitions_mode_flag = = 1 ) |
| **intra_subpartitions_split_flag** |
| } |

A method of matching the syntax in Table 22 with the existing syntax composition is shown in Table 23.

[Table 23]

| |
|---|
| } else { |
| if(sps_adaptive_mrl_enabled_flag && ((y0%CtbSizeY)>0)) |
| *adaptive_mrl_flag* |
| if(sps_isp_enabled_flag && *adaptive_mrl_flag* == 0 && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| if(*adaptive_mrl_flag* == 0) |
| **intra_luma_mpm_flag**[x0][y0] |
| if(intra_luma_mpm_flag[x0][y0]){ |
| if(*adaptive_mrl_flag* == 0 ) |
| **intra_luma_not_planar_flag**[x0][y0] |
| if(intra_luma_not_planar_flag[x0][y0]) |
| **intra_luma_mpm_idx**[x0][y0] |
| } else |
| **intra_luma_mpm_remainder**[x0][y0] |
| } |

<Example 2-1-3> Signaling the multiple reference lines

In this embodiment, the video encoding device signals multiple reference lines. The video encoding device may parse num_refLine, which indicates the number of reference lines to be used for prediction for each block at the CU level. Then, the video encoding device may parse reference line indices as many as the value of num_refLine. In this case, the embodiment may save signaling of num_refLine and use a block-independent fixed value.

The following syntax elements are required for this example. One or more of these syntax elements may be used.

The element num_refLine indicates the number of reference lines to be used for prediction and has a value of 1 or more. If num_refLine is 1, the video encoding device uses intra_luma_ref_idx 0 as a single reference line. If num_refLine is not 1, the video encoding device parses reference line indices as many as the magnitude of num_refLine. If num_refLine is not present, num_refLine is inferred to be 1.

The element intra_luma_ref_indices represents the reference line indices as many as the num_refLine used in the prediction. Each index has a different value equal to or greater than 0.

Specific pseudo code according to this example may be realized as follows. Either the intra-prediction mode or the information on the reference lines may be parsed first.

| |
|---|
| **Parse intra-prediction mode** |
| **Parse the number of reference lines to use for prediction (num_refLine)** |
| if (case of using multiple reference lines) |
|     **Parse multiple reference line indices (intra_luma_ref_indices)** |

The syntax, according to the pseudo code described above, required for transmission is shown in Table 24. When num_refLine, which is the number of reference lines, is used as the block-independent fixed value, the video encoding device may omit parsing of num_refLine and may use the preset value.

[Table 24]

| } else { |
| --- |
| **intra_luma_mpm_flag**[x0][y0] |
| ... |
| *if(sps_adaptive_mrl_enabled_flag && ((y0%CtbSizeY)>0))* |
| **num_refLine** |
| *if(num_refLine!=1)* |
| **intra_luma_ref_indices** |
| if(sps_isp_enabled_flag &&*num_refLine* == 1 && <br> (cbWidth<=MaxTbSizeY && cbHeight<=MaxTbSizeY) && <br> (cbWidth*cbHeight>MinTbSizeY*MinTbSizeY) && <br> !cu_act_enabled_flag) |
| **intra_subpartitions_mode_flag** |
| if(intra_subpartitions_mode_flag == 1) |
| **intra_subpartitions_split_flag** |
| } |

Table 25 shows a method of matching the syntax in Table 24 with the existing syntax composition.

[Table 25]

| } else { |
| --- |
| if(sps_adaptive_mrl_enabled_flag && ((y0%CtbSizeY)>0)) |
| **num_refLine** |
| *if(num_refLine !=1)* |
| ***intra_luma_ref-indices*** |
| if(sps_isp_enabled_flag && *num_refLine* == 1 && <br> (cbWidth <=MaxTbSizeY && cbHeight <=MaxTbSizeY) && <br> (cbWidth*cbHeight>MinTbSizeY*MinTbSizeY) && <br> !cu_act_enabled_flag) |
| **intra_subpartitions_mode_flag** |
| if(intra_subpartitions_mode_flag == 1) |
| **intra_subpartitions_split_flag** |
| *if(num_refLine == 1)* |
| **intra_luma_mpm_flag**[x0][y0] |
| if(intra_luma_mpm_flag[x0][y0]){ |
| *if(num_refLine == 1)* |
| **intra_luma_not_planar_flag**[x0][y0] |
| if( intra_luma_not_planar_flag[x0][y0]) |
| **intra_luma_mpm_idx**[x0][y0] |
| }else |
| **intra_luma_mpm_remainder**[x0][y0] |
| } |

<Example 2-2> Determining weights of multiple predictors

In this example, the video encoding device determines the weight of each predictor to weighted-combine the predictors generated by using the different reference lines. To determine the weight of each predictor, this example may utilize a method of using predefined weights (Example 2-2-1) or a method of signaling the weights (Example 2-2-2).

<Example 2-2-1> Using predefined weights

In this example, the video encoding device uses predefined weights. In this case, equal weights may be used. For example, the ratio of weights for two reference lines may be 1:1, and the ratio of weights for three reference lines may be 1:1:1. As another example, the closer the distance of the reference line to the current block, the higher the weight may be used. For example, the ratio of weights for two reference lines may be 3:1, and the ratio of weights for three reference lines may be 2:1:1.
As an example, when two reference lines, intra_luma_ref_idx 0, and intra_luma_ref_idx 1 are used, equal weights may be set for the two predictors as shown in Equation 4.

【Equation 4】

$$pred = \frac{1}{2} \times pred_{ref\ 0} + \frac{1}{2} \times pred_{ref\ 1}$$

Alternatively, high weights may be set for predictors generated by using nearby reference lines, as shown in Equation 5.

【Equation 5】

$$pred = \frac{3}{4} \times pred_{ref\ 0} + \frac{1}{4} \times pred_{ref\ 1}$$

<Example 2-2-1> Signaling the weights

In this example, the video encoding device signals weights. The video encoding device signals a plurality of reference line indices for each block at the CU level and then signals the weight used in the weighted combination of the predictors corresponding to the respective reference lines. The weight may be signaled by combined_mrl_weight to signal the appropriate weight value for the predictors corresponding to the respective reference lines. If the reference lines are determined without separate signaling, such as in Example 2-1-1 or Example 2-1-2, the weights may be signaled in order from the smallest index of the plurality of reference line indices (i.e., in order of their closeness to the current block), or vice versa.
The following syntax elements are required for this example. One or more of these syntax elements may be used.
The element adaptive_mrl_flag is a flag indicating whether adaptive MRL is to be applied and may have values of 0 and 1. If the flag is 0, the video encoding device uses intra_luma_ref_idx 0 as a single reference line, and if the flag is 1, the video encoding device determines multiple reference lines according to this example. If adaptive_mrl_flag is not present, adaptive_mrl_flag is inferred to be 0.
The element num_refLine indicates the number of reference lines to be used for prediction and has a value of 1 or more. If num_refLine is 1, the video encoding device uses intra_luma_ref_idx 0 as a single reference line, and if num_refLine is not 1, the video encoding device parses reference line indices as many as the magnitude of num_refLine. If num_refLine is not present, num_refLine is inferred to be 1.
The element intra_luma_ref_indices represents the reference line indices as many as num_refLine used in the prediction. Each index has a different value of 0 or greater.
The element combined_mrl_weight indicates the weight used in the weighted combination of the predictors corresponding to the respective reference lines.
When multiple reference lines used for the weighted combination are signaled as in Example 2-1-3, the specific pseudo code according to this example may be realized as follows. Either the intra-prediction mode or the information on the reference lines may be parsed first.

> **Parse intra-prediction mode**
>
> **Parse the number of reference lines to use for prediction (num_refLine)**
>
> if (case of using multiple reference lines)
>
> > **Parse multiple reference line indices (intra_luma_ref_indices)**
> >
> > **Parse the weight of each reference line (combined_mrl_weight)**

The syntax, according to the pseudo code described above, required for transmission is shown in Table 26. When num_refLine, which is the number of reference lines, is used as a block-independent fixed value, the video encoding device may omit parsing of num_refLine and may use the preset value.

[Table 26]

| |
|---|
| } else { |
| **intra_luma_mpm_flag**[x0][y0] |
| ... |
| *if(sps_adaptive_mrl_enabled_flag && ((y0%CtbSizeY)>0))* |
| ***num_refLine*** |
| *if(num_refLine!=1){* |
| ***intra_luma_ref_indices*** |
| ***combined_mrl_weight*** |
| *}* |
| if(sps_isp_enabled_flag && *num_refLine == 1* && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| } |

Table 27 shows a method of matching the syntax in Table 26 with the existing syntax composition.

[Table 27]

| |
|---|
| } else { |
| *if(sps_adaptive_mrl_enabled_flag && ((y0%CtbSizeY)>0))* |
| ***num_refLine*** |
| *if(num_refLine!=1){* |
| ***intra_luma_ref_indices*** |
| ***combined_mrl_weight*** |
| *}* |
| if(sps_isp_enabled_flag && *num_refLine == 1* && (cbWidth<=MaxTbSizeY && cbHeight<=MaxTbSizeY) && (cbWidth*cbHeight>MinTbSizeY*MinTbSizeY) && !cu_act_enabled_flag) |

(continued)

| |
|---|
| **intra_subpartitions_mode_flag** |
| if(intra_subpartitions_mode_flag = = 1 ) |
| **intra_subpartitions_split_flag** |
| if(*num_refLine == 1*) |
| **intra_luma_mpm_flag**[x0][y0] |
| if(intra_luma_mpm_flag[x0][y0]){ |
| if(*num_refLine == 1*) |
| **intra_luma_not_planar_flag**[x0][y0] |
| if(intra_luma_not_planar_flag[x0][y0]) |
| **intra_luma_mpm_idx**[x0][y0] |
| }else |
| **intra_luma_mpm_remainder**[x0][y0] |
| } |

When the multiple reference lines used for weighted-combining are derived as in Example 2-1-1 or Example 2-1-2, the specific pseudo code according to this example may be realized as follows. Either the intra-prediction mode or the signal indicating whether adaptive MRL is to be applied may be parsed first.

| |
|---|
| **Parse intra-prediction mode** |
| **Parse the signal indicating whether to apply Adaptive MRL (adaptive_mrl_flag)** |
| if (Adaptive MRL applied) |
|     **Parse the weight of each reference line (combined_mrl_weight)** |

The syntax, according to the pseudo code described above, required for transmission is shown in Table 28. In Table 28, the intra-prediction mode is parsed first.

[Table 28]

| |
|---|
| } else { |
| **intra_luma_mpm_flag**[x0][y0] |
| ... |
| if(*sps_adaptive_mrl_enabled_flag* && ((y0%CtbSizeY)>0)) |
| ***adaptive_mrl_flag*** |
| if(adaptive_mrl_flag==1) |
| ***combined_mrl_weight*** |
| if(sps_isp_enabled_flag && *adaptive_mrl_flag* == 0 && (cbWidth<=MaxTbSizeY && cbHeight<=MaxTbSizeY) && (cbWidth*cbHeight>MinTbSizeY*MinTbSizeY) && !cu_act_enabled_flag ) |
| **intra_subpartitions_mode_flag** |
| if(intra_subpartitions_mode_flag == 1) |
| **intra_subpartitions_split_flag** |

(continued)

|  |
|---|
| } |

Table 29 shows a method of matching the syntax in Table 28 with the existing syntax composition.

[Table 29]

| } else { |
|---|
| if(sps_adaptive_mrl_enabled_flag && ((y0%CtbSizeY)>0)) |
| ***adaptive_mrl_flag*** |
| *if(adaptive_mrl_flag==1)* |
| ***combined_mrl_weight*** |
| if(sps_isp_enabled_flag && *adaptive_mrl_flag* == 0 && (cbWidth <=MaxTbSizeY && cbHeight <=MaxTbSizeY) && (cbWidth * cbHeight > MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| if(*adaptive_mrl_flag* == 0) |
| **intra_luma_mpm_flag**[x0][y0] |
| if(intra_luma_mpm_flag[x0][y0]){ |
| if(*adaptive_mrl_flag* == 0) |
| **intra_luma_not_planar_flag**[x0][y0] |
| if(intra_luma_not_planar_flag[x0][y0]) |
| **intra_luma_mpm_idx**[x0][y0] |
| } else |
| **intra_luma_mpm_remainder**[x0][y0] |
| } |

<Example 3> Using different reference lines for different internal areas of the block

In this example, the video encoding device partitions the current block into arbitrary internal areas and generates a predictor for each area by using a different reference line. The video encoding device may determine how to partition the block into a plurality of internal areas based on the orientation of the reference line used for prediction (referencing direction in intra-prediction mode).

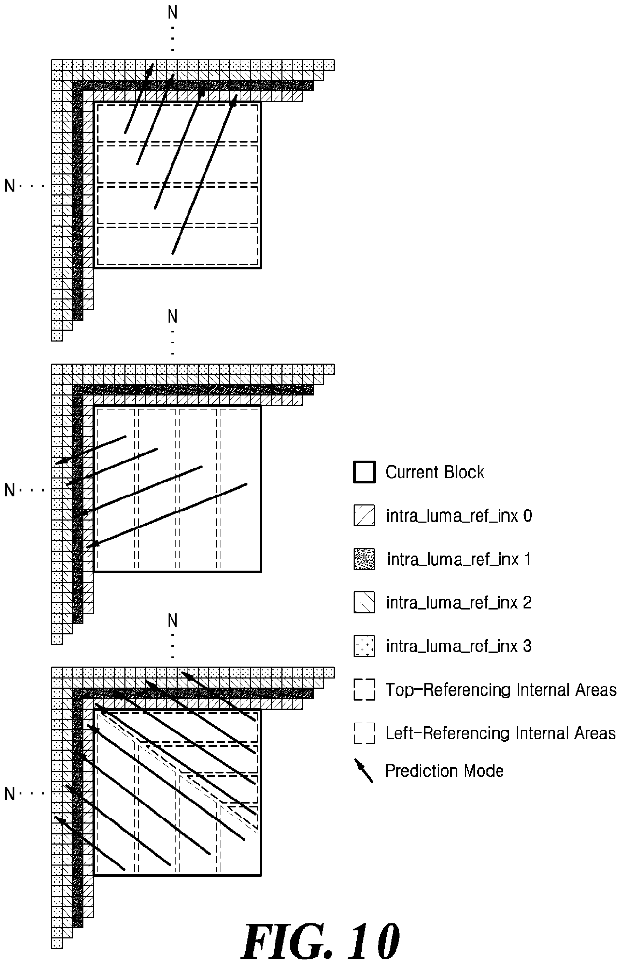

FIG. 10 is a diagram illustrating different reference lines by respective internal areas, according to at least one embodiment of the present disclosure.

As illustrated in FIG. 10, when a top reference line is used to predict a block (with an intra-prediction mode of 50 or above), the block may be partitioned horizontally to generate internal areas. When a left reference line is used (with an intra-prediction mode 18 or below), the block may be partitioned vertically to generate internal areas. Furthermore, when both top and left reference lines are used (with intra-prediction mode 19 through 49), as illustrated in FIG. 10, the video encoding device may split the block into a top-referencing area and a left-referencing area and then may further split each area according to the direction of the reference line used by each area to generate internal areas. The video encoding device may determine the order of the top-referencing internal areas and the left-referencing internal areas beginning with areas proximate to each reference line and may use a common reference line index for the top-referencing and left-referencing internal areas at the same ordinal locations. In this example, each split internal area is equal by default, but a single pixel may constitute one internal area for setting different reference lines per pixel.

On the other hand, since the predictors are generated by using different reference lines for the partitioned internal areas, discontinuities may occur at the boundaries between areas. To address this, the video encoding device may further apply a filter to the boundaries between the internal areas, such as in Example 1. In this example, the number of internal areas and the reference line used by each internal area may be derived or signaled based on block information.

<Example 3-1> Deriving the number of internal areas based on the block information and using a fixed reference line for each area

In this example, to use different reference lines for the top-referencing and/or left-referencing internal areas, the video encoding device derives the number of internal areas based on the block information and uses a fixed reference line for each area. As an example, this example may take into account the distance from the reference line to its facing block side. The height of the block is selected for the vertical mode 50 and above, and the width of the block is selected for the horizontal mode 18 and below. The larger of the block width and block height may be selected for prediction modes greater than horizontal mode 18 and less than vertical mode 50. The video encoding device determines the number of areas within the block based on the selected block width or block height. In one example, as shown in Table 21, the video encoding device may divide the current block into a larger number of areas with an increase in block width or block height, which allows more reference lines to be used for prediction. As another example, the video encoding device may determine the number of areas within a block, by using different reference lines by referencing data of one or both of information about the current block, such as the current block's width, height, area, aspect ratio, prediction mode, pixel value, and position, or information on neighboring blocks, e.g., whether to use this example, the number of the used top and left reference lines by the neighboring blocks, the neighboring blocks' width/height/area/aspect ratio/prediction mode/pixel value/position.

In selecting a reference line to use for prediction for each internal area, the video encoding device may determine the reference line according to a certain rule. For example, if the number of internal areas is n, the video encoding device may use the n reference lines closest to the block but may allow the internal area at a shorter distance from the block boundary neighboring the reference lines to use a more distant reference line. Alternatively, the reference lines for each internal area may be determined in a variety of ways, such as allowing the internal area at a longer distance from the block boundary neighboring the reference lines to use a more distant reference line.

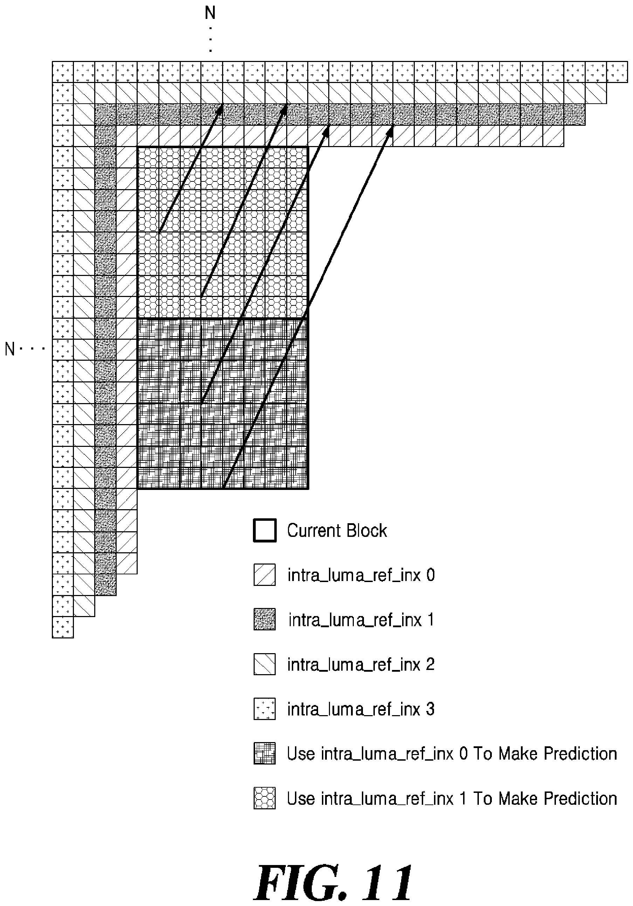

For example, when the prediction mode is vertical mode 50 or above and the block has a height of 16, the video encoding device may determine the number of internal areas and the reference line for each area according to the methods described above, as illustrated in FIG. 11.

The syntax elements required for this example are as follows.

The element adaptive_mrl_flag is a flag indicating whether adaptive MRL is to be applied and may have values of 0 and 1. If the flag is 0, the video encoding device uses intra_luma_ref_idx 0 as a single reference line, and if the flag is 1, the video encoding device determines reference lines for the plurality of internal areas according to this example. If adaptive_mrl_flag is not present, adaptive_mrl_flag is inferred to be 0.

Specific pseudo code according to this example may be realized as follows. In this case, either the intra-prediction mode or the flag indicating whether adaptive MRL is to be applied may be parsed first.

> **Parse intra-prediction mode**
>
> **Parse the signal indicating whether to apply Adaptive MRL (adaptive_mrl_flag)**

The syntax, according to the pseudo code described above, required for transmission is shown in Table 30.

[Table 30]

| } else { |
|---|
| **intra_luma_mpm_flag**[x0][y0] |
| ... |
| if(sps_adaptive_mrl_enabled_flag && ((y0%CtbSizeY)>0)) |
| *adaptive_mrl_flag* |
| if(sps_isp_enabled_flag && *adaptive_mrl_flag* == 0 && (cbWidth<=MaxTbSizeY && cbHeight<=MaxTbSizeY) && (cbWidth*cbHeight>MinTbSizeY*MinTbSizeY) && !cu_act_enabled_flag) |

(continued)

| |
|---|
| **intra_subpartitions_mode_flag** |
| if(intra_subpartitions_mode_flag == 1) |
| **intra_subpartitions_split_flag** |
| } |

A method of matching the syntax in Table 30 with the existing syntax composition is shown in Table 31.

[Table 31]

| |
|---|
| } else { |
| if(sps_adaptive_mrl_enabled_flag && ((y0%CtbSizeY)>0)) |
| ***adaptive_mrl_flag*** |
| if(sps_isp_enabled_flag && *adaptive_mrl_flag* == 0 && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| if(*adaptive_mrl_flag* == 0) |
| **intra_luma_mpm_flag**[x0][y0] |
| if(intra_luma_mpm_flag[x0][y0]){ |
| if(*adaptive_mrl_flag* == 0) |
| **intra_luma_not_planar_flag**[x0][y0] |
| if(intra_luma_not_planar_flag[x0][y0]) |
| **intra_luma_mpm_idx**[x0][y0] |
| } else |
| **intra_luma_mpm_remainder**[x0][y0] |
| } |

<Example 3-2> Determining the number of internal areas regardless of block information and using fixed reference line for each area

In this example, the video encoding device determines the number of top-referencing and/or left-referencing internal areas independent of block information and uses a fixed reference line for each area. To determine the number of internal areas when using different reference lines for the block's different internal areas, the video encoding device may signal num_subArea, which represents the number of subdivided internal areas for each block at the CU level. Alternatively, the video encoding device may not signal num_subArea and may use num_subArea as a fixed value independent of the block information. In selecting a reference line for each internal area, the video encoding device may use a fixed reference lines depending on the number of internal areas by applying the same method as in Example 3-1. The number of reference lines according to num_subArea is shown in Table 32.

[Table 32]

| *num_subArea* | Number of Reference Lines |
|---|---|
| 1 | One (*intra_luma_ref_idx 0*) |
| 2 | Two (*intra_luma_ref_idx 0,1*) |
| 3 | Three (*intra_luma_ref_idx 0,1,2*) |

(continued)

| num_subArea | Number of Reference Lines |
|---|---|
|  |  |

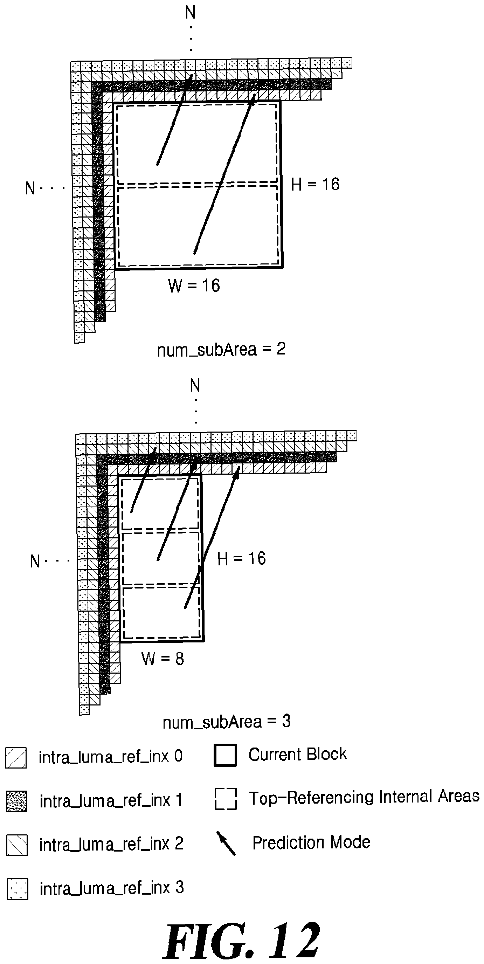

For example, when num_subArea is 2 or 3, the video encoding device may determine the number of internal areas and the reference line for each area according to the method described above, as illustrated in FIG. 12.

The syntax elements required for this example are as follows.

The element num_subArea indicates the number of segmented internal areas that use different reference lines for prediction and has a value equal to or greater than 1. If num_subArea is 1, the video encoding device may use intra_luma_ref_idx 0 as a single reference line, and if num_subArea is not 1, the video encoding device may determine a fixed reference lines for the internal areas as many as the magnitude of num_subArea. If num_subArea is not present, num_subArea is inferred to be 1.

Specific pseudo code according to this example may be realized as follows. Either the intra-prediction mode or the number of internal areas may be parsed first.

> **Parse intra-prediction mode**
>
> **Parse the number of subdivided internal areas (num_subArea)**

The syntax, according to the pseudo code described above, required for transmission is shown in Table 33. When num_subArea, which is the number of split internal areas, is used as a block-independent fixed value, the video encoding device may omit parsing of num_subArea and may use the preset value.

[Table 33]

| |
|---|
| } else { |
| **intra_luma_mpm_flag**[x0][y0] |
| ... |
| if(sps_adaptive_mrl_enabled_flag && ((y0%CtbSizeY)>0)) |
| **num_subArea** |
| if(sps_isp_enabled_flag && num_subArea == 1 && (cbWidth <=MaxTbSizeY && cbHeight <=MaxTbSizeY) && (cbWidth * cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| } |

A method of matching the syntax in Table 33 with the existing syntax composition is shown in Table 34.

[Table 34]

| |
|---|
| } else { |
| if(sps_adaptive_mrl_enabled_flag && ((y0%CtbSizeY)>0)) |
| **num_subArea** |
| if(sps_isp_enabled_flag && num_subArea == 1 && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |

(continued)

| |
|---|
| if(*num_subArea* == 1) |
| **intra_luma_mpm_flag**[x0][y0] |
| if(intra_luma_mpm_flag[x0][y0]){ |
| if(*num_subArea* == 1) |
| **intra_luma_not_planar_flag**[x0][y0] |
| if(intra_luma_not_planar_flag[x0][y0]) |
| **intra_luma_mpm_idx**[x0][y0] |
| } else |
| **intra_luma_mpm_remainder**[x0][y0] |
| } |

<Example 3-3> Determining the number of internal areas regardless of block information and signaling reference line for each area

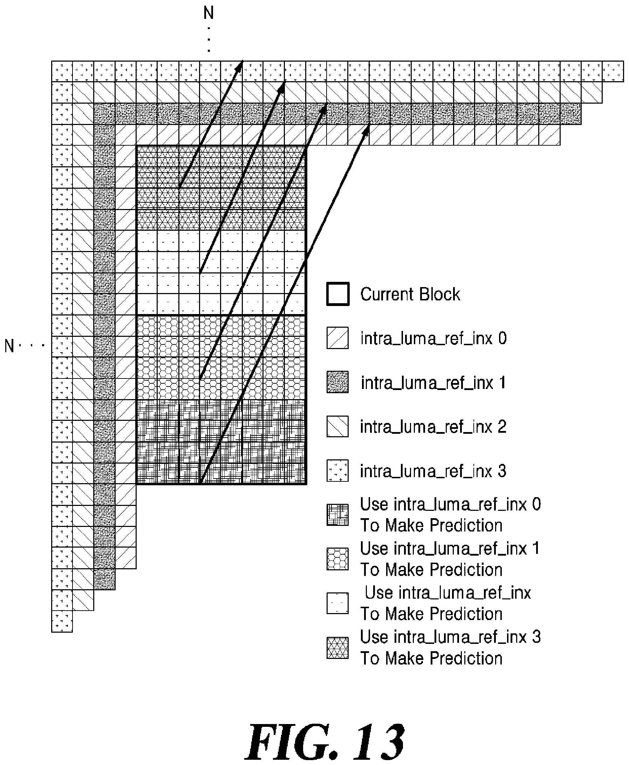

In this example, the video encoding device determines the number of top-referencing and/or left-referencing internal areas regardless of the block information and signals a reference line for each internal area. To determine the number of internal areas when different reference lines are used for the block's different internal areas, the video encoding device may signal num_subArea, which represents the number of subdivided internal areas for each block at the CU level. Alternatively, the video encoding device may not signal num_subArea and may use a fixed value independent of the block information. Upon signaling or determining num_subArea, the video encoding device may parse intra_luma_ref_indices, which are reference line indices, as many as the magnitude of num_subArea. The video encoding device may signal, beginning with the reference line used by the internal area more closely distanced from the block boundary neighboring the reference lines, or vice versa. For example, if num_subArea is determined to be 4, as illustrated in FIG. 13, the video encoding device may parse the intra_luma_ref_indices in the order of 3, 2, 1, 0 to signal, beginning with the reference line being used by the internal area more closely distanced from the reference lines.

The following Syntax elements are required for this example. One or more of these syntax elements may be used.

The element num_subArea indicates the number of subdivided internal areas using different reference lines for prediction and has a value of 1 or more. If num_subArea is equal to 1, the video encoding device uses intra_luma_ref_idx 0 as a single reference line, and if num_subArea is not equal to 1, the video encoding device parses reference line indices as many as the magnitude of num_subArea. If num_subArea is not present, num_subArea is inferred to be 1.

The element intra_luma_ref_indices represents the reference line indices as many as the num_subArea used in the prediction. Each index has a value equal to or greater than 0.

Specific pseudo code according to this example may be realized as follows. Either the intra-prediction mode or the number of internal areas may be parsed first.

| |
|---|
| **Parse intra-prediction mode** |
| **Parse the number of subdivided internal areas (num_subArea)** |
| if (case of multiple subareas) |
| **Parse multiple reference line indices (intra_luma_ref_indices)** |

The syntax, according to the pseudo code described above, required for transmission is shown in Table 35. When num_subArea, which is the number of subdivided internal areas, is used as a block-independent fixed value, the video encoding device may omit the parsing of num_subArea and may use the preset value.

[Table 35]

| |
|---|
| } else { |
| **intra_luma_mpm_flag**[x0][y0] |

(continued)

| |
|---|
| ... |
| *if(sps_adaptive_mrl_enabled_flag && ((y0%CtbSizeY)>0))* |
| **num_subArea** |
| *if(num_subArea!=1)* |
| **intra_luma_ref_indices** |
| if(sps_isp_enabled_flag && *num_subArea == 1* && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| } |

A method of matching the syntax in Table 35 with an existing syntax composition is shown in Table 36.

[Table 36]

| |
|---|
| } else { |
| if(sps_adaptive_mrl_enabled_flag && ((y0%CtbSizeY)>0)) |
| **num_subArea** |
| *if(num_subArea!=1)* |
| **intra_luma_ref-indices** |
| if(sps_isp_enabled_flag && *num_subArea == 1* && (cbWidth<=MaxTbSizeY && cbHeight<=MaxTbSizeY) && (cbWidth*cbHeight>MinTbSizeY*MinTbSizeY) && !cu_act_enabled_flag) |
| **intra_subpartitions_mode_flag** |
| if(intra_subpartitions_mode_flag == 1) |
| **intra_subpartitions_split_flag** |
| if(*num_subArea == 1*) |
| **intra_luma_mpm_flag**[x0][y0] |
| if(intra_luma_mpm_flag[x0][y0]){ |
| if(*num_subArea == 1*) |
| **intra_luma_not_planar_flag**[x0][y0] |
| if(intra_luma_not_planar_flag[x0][y0]) |
| **intra_luma_mpm_idx**[x0][y0] |
| } else |
| **intra_luma_mpm_remainder**[x0][y0] |
| } |

<Example 4> Selectively combining Example 1 with Examples 2 and 3

In this example, when both the top and left reference lines are used depending on the direction of the prediction mode in predicting the current block, the video encoding device determines the reference lines corresponding to the top side and left side independently as in Example 1. In this case, the video encoding device may selectively use Example 2 or Example 3 rather than using a single reference line on the top side or left side. According to this example, a combination is available between Examples 1 and 2 (Example 4-1), between Examples 1 and 3 (Example 4-2), or between Examples 1, 2, and 3 (Example 4-3).

<Example 4-1> Combining Example 1 and Example 2

In this example, where a prediction mode combines Example 1 and Example 2 to use both top and left reference lines in predicting the current block, the video encoding device determines whether and how to apply Example 2 to the top-referencing area and the left-referencing area independently. The video encoding device may perform the prediction by using a single reference line alone for each area or may use multiple reference lines for each pixel within each area by Example 2.

As shown in Table 37, the video encoding device may signal a single_ref_T_flag, by which a value of 1 indicates the use of a single top reference line according to Example 1 or a value of 0 indicates the use of multiple top reference lines according to Example 2. Similarly, the video encoding device may signal a single_ref_L_flag to indicate information on the left reference lines.

[Table 37]

| single_ref_T_flag | 0 | For top-referencing area, determine multiple reference lines according to Example 2 |
| | 1 | Determine top reference line according to Example 1 |
| single_ref_L_flag | 0 | For left-referencing area, determine multiple reference lines according to Example 2 |
| | 1 | Determine left reference line according to Example 1 |

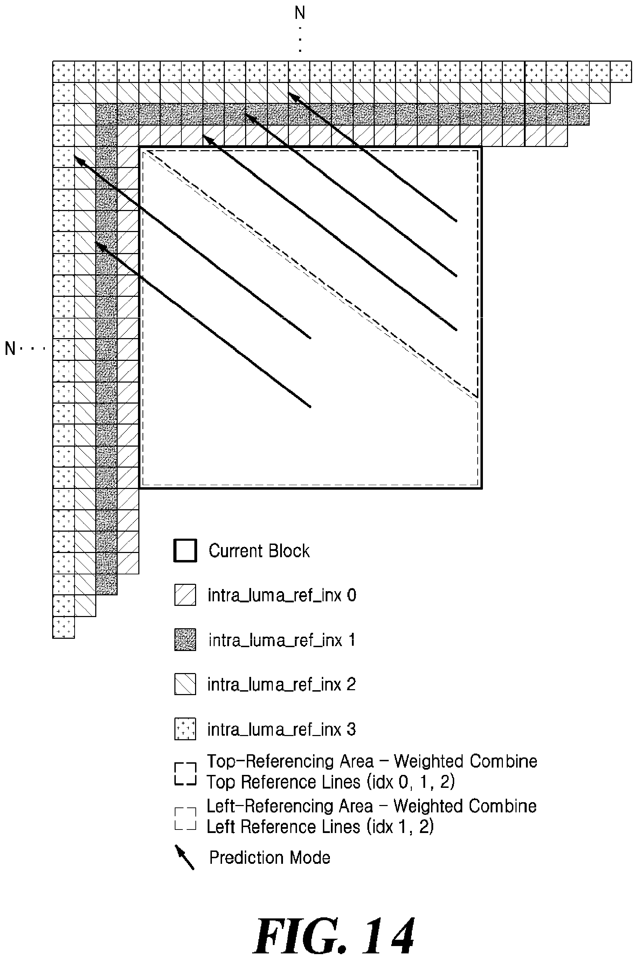

On the other hand, if both the single_ref_T_flag and the single_ref_L_flag are 0, the video encoding device may determine multiple reference lines to be used for weighted-combining for the top-referencing area and the left-referencing area. For example, as illustrated in FIG. 14, for the top-referencing area, the video encoding device may determine multiple reference lines (intra_luma_ref_idx 0, 1, 2) according to Example 2-1-3, may generate predictors by using the respective reference lines, and may weighted-combine the predictors by using equal weights according to Example 2-2-1. Additionally, as illustrated in FIG. 14, for the left-referencing area, independently of the top-referencing area, the video encoding device may determine multiple reference lines (intra_luma_ref_idx 1, 2) according to Example 2-1-3, may generate predictors by using the respective reference lines, and may weighted-combine the predictors by using equal weights according to Example 2-2-1.

The syntax elements required for this example are as follows. One or more of these syntax elements may be used.

The element adaptive_mrl_flag is a flag indicating whether adaptive MRL is to be applied and may have values of 0 and 1. If the flag is 0, the video encoding device uses intra_luma_ref_idx 0 for the top and left reference lines, and if the flag is 1, the video encoding device determines according to this example how the left and top reference lines are determined. If adaptive_mrl_flag is not present, adaptive_mrl_flag is inferred to be 0.

The single_ref_T_flag is a flag indicating whether a single top reference line is to be used and may have values of 0 and 1. If this flag is 1, the video encoding device may use a single reference line determined by Example 1 as the top reference line, and if this flag is 0, the video encoding device may use multiple top reference lines determined by Example 2.

The single_ref_L_flag is a flag indicating whether a single left reference line is to be used and may have values of 0 and 1. If this flag is 1, the video encoding device may use a single reference line determined by Example 1 as the left reference line, and if it is 0, the video encoding device may use multiple left reference lines determined by Example 2.

Specific pseudo code according to this example may be realized as follows. Either a signal indicating whether to use a single top reference line or a signal indicating whether to use a single left reference line may be parsed first. The information required for the respective examples depends on the syntax composition as described above.

**Parse intra-prediction mode**

| |
|---|
| if (prediction mode using both top and left reference lines) |
| **Parse a signal indicating whether to apply Adaptive MRL (adaptive_mrl_flag)** |
| if (Adaptive MRL applied) |
| **Parse a signal indicating whether to use a single top reference line (single_ref_T_flag)** |
| **Parse a signal indicating whether to use a single left reference line (single_ref_L_flag)** |
| if (determining the single top reference line according to Example 1) |
| **Parse information on the single top reference line according to Example 1** |
| else |
| **Parse information on multiple top reference lines and weights according to Example 2** |
| if (determining the single left reference line according to Example 1) |
| **Parse information on the single left reference line according to Example 1** |
| else |
| **Parse information on multiple left reference lines and weights according to Example 2** |

<Example 4-2> Combining Example 1 and Example 3

In this example, in a prediction mode that combines Example 1 and Example 3 to use both top and left reference lines when predicting the current block, the video encoding device determines whether and how to apply Example 3 for the top-referencing area and the left-referencing area independently. The video encoding device may perform the prediction by using a single reference line alone for each area, or the video encoding device may further divide each area into a plurality of internal areas according to Example 3 and may use different reference lines for different areas. As shown in Table 38, the video encoding device may signal the single_ref_T_flag to indicate that, if the flag is 1, a single top reference line is used according to Example 1 or indicate that, if the flag is 0, a plurality of top reference lines is used according to Example 3. Similarly, the video encoding device may signal the single_ref_L_flag to indicate information on the left reference lines.

[Table 38]

| single_ref_T_flag | 0 | For top-referencing area, determine multiple reference lines according to Example 3 |
|---|---|---|
| | 1 | Determine top reference line according to Example 1 |
| single_ref_L_flag | 0 | For left-referencing area, determine multiple reference lines according to Example 3 |
| | 1 | Determine left reference line according to Example 1 |

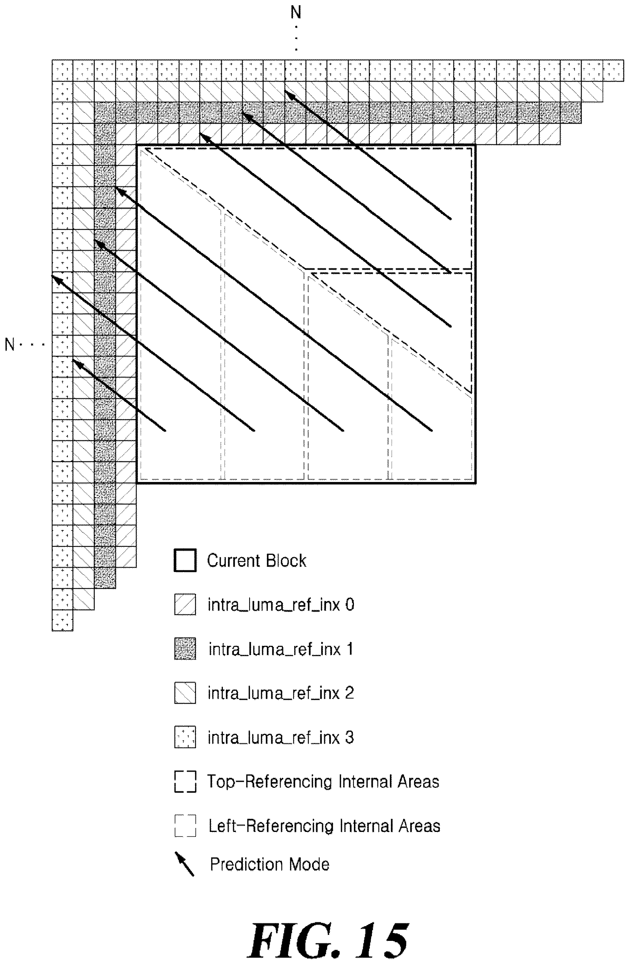

On the other hand, if both the single_ref_T_flag and the single_ref_L_flag are 0, the video encoding device may determine multiple reference lines to be used for weighted-combining for the top-referencing area and the left-referencing area. For example, as illustrated in FIG. 15, for the top-referencing area, the video encoding device may determine num_subArea and reference lines (intra_luma_ref_idx 0, 1) according to Example 3-3, may divide the top-referencing area into two internal areas according to the num_subArea, and then may generate predictors for the respective internal areas by using the corresponding reference lines. Following the rule of signaling first the reference line index of the internal area closer to the reference line, the reference line indices may be signaled in the order of intra_luma_ref_idx 1 and intra_luma_ref_idx 0.

Further, for the left-referencing area, as illustrated in FIG. 15, separately of the top-referencing area, the video encoding device determines num_subArea and reference lines (intra_luma_ref_idx 0, 1, 2, 3) according to Example 3-3, divides the left-referencing area into four internal areas according to the num_subArea, and then generates predictors by using the reference lines corresponding to the respective internal areas. Similarly, following the rule of signaling first the reference line index of the internal area closer to the reference line, the reference line indices may be signaled in the order of intra_luma_ref_idx 2, intra_luma_ref_idx 3, intra_luma_ref_idx 1, and intra_luma_ref_idx 0.

The following syntax elements are required for this example. One or more of these syntax elements may be used.

The element adaptive_mrl_flag is a flag indicating whether adaptive MRL is to be applied and may have values of 0 and 1. If the flag is 0, the video encoding device uses intra_luma_ref_idx 0 for the top and left reference lines. If the flag is 1, the video encoding device determines by the example how the left and top reference lines are determined. If adaptive_mrl_flag is not present, adaptive_mrl_flag is inferred to be 0.

The single_ref_T_flag is a flag indicating whether a single top reference line is to be used and may have values of 0 and 1. If this flag is 1, the video encoding device may use a single reference line determined by Example 1 as the top reference line, and if this flag is 0, the video encoding device may use multiple top reference lines determined by Example 3.

The single_ref_L_flag is a flag indicating whether a single left reference line is to be used and may have values of 0 and 1. If this flag is 1, the video encoding device may use a single reference line determined according to Example 1 as the left reference line, and if this flag is 0, the video encoding device may use a plurality of left reference lines determined according to Example 3.

Specific pseudo code according to this example may be realized as follows. Either the signal indicating whether to use a single top reference line or the signal indicating whether to use a single left reference line may be parsed first. The information required for the respective examples depends on the syntax composition as described above.

| Parse intra-prediction mode |
|---|
| if (prediction mode using both top and left reference lines) |
| **Parse a signal indicating whether to apply Adaptive MRL (adaptive_mrl_flag)** |
| if (Adaptive MRL applied) |
| **Parse a signal indicating whether to use a single top reference line (single_ref_T_ flag)** |
| **Parse a signal indicating whether to use a single left reference line (single_ref_L_ flag)** |
| if (determining the single top reference line according to Example 1) |
| **Parse information on the single top reference line according to Example 1** |
| else |
| **Parse information on multiple top reference lines according to Example 3** |
| if (determining the single left reference line according to Example 1) |
| **Parse information on the single left reference line according to Example 1** |
| else |
| **Parse information on multiple left reference lines according to Example 3** |

<Example 4-3> Combining Example 1 with Examples 2 and 3

In this example, where a prediction mode combines Example 1 with Examples 2 and 3 to use both top and left reference lines in predicting the current block, the video encoding device determines whether and how to apply Example 2 or Example 3 for the top-referencing area and the left-referencing area independently. The video encoding device may perform the prediction by using a single reference line alone for each area, by using multiple reference lines for each pixel within each area by Example 2, or by using different reference lines for different areas by further dividing each area into a plurality of internal areas by Example 3.

As shown in Table 39, the video encoding device may signal a single_ref_T_flag, by which its value of 1 indicates the use of a single top reference line according to Example 1, and its value of 0 indicates which method to use for prediction between Example 2 and Example 3 by signaling a multi_ref_idx_T. The video encoding device indicates, responsive to the value 0 of multi_ref_idx_T, that multiple top reference lines are used according to Example 2 for the top-referencing area, or responsive to the value 1 of multi_ref_idx_T, that multiple top reference lines are used according to Example 3. Similarly, the video encoding device signals single_ref_L_flag and multi_ref_idx_L to indicate information on the left reference line.

[Table 39]

| single_ref_T_flag | 0 | multi_ref_idx_T | 0 | For top-referencing area, determine multiple reference lines according to Example 2 |
| | | | 1 | For top-referencing area, determine multiple reference lines according to Example 3 |
| | 1 | | | Determine top reference line according to Example 1 |
| single_ref_L_flag | 0 | multi_ref_idx_L | 0 | For left-referencing area, determine multiple reference lines according to Example 2 |
| | | | 1 | For left-referencing area, determine multiple reference lines according to Example 3 |
| | 1 | | | Determine left reference line according to Example 1 |

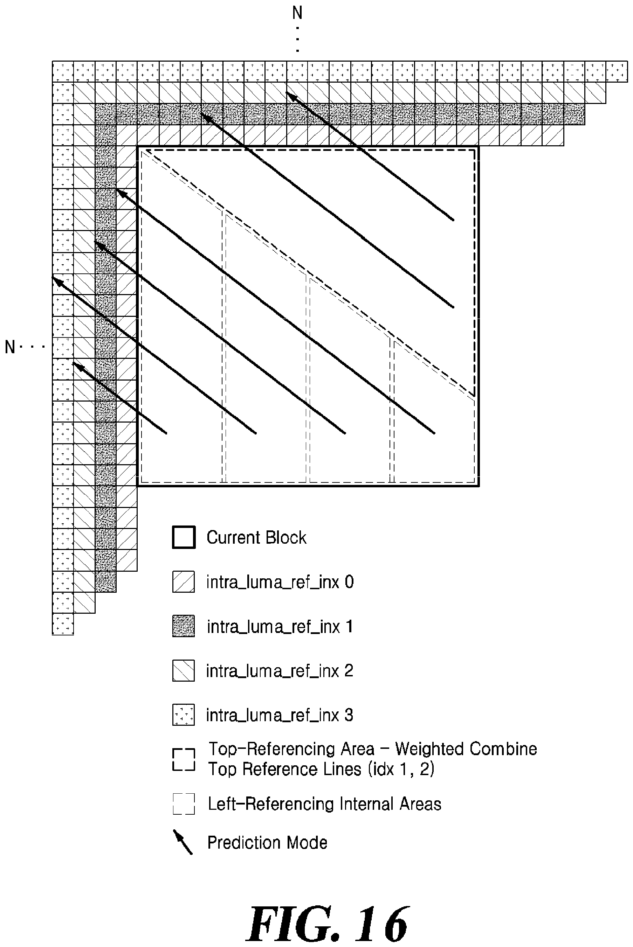

On the other hand, if both single_ref_T_flag and single_ref_L_flag are 0, the video encoding device may signal multi_ref_idx_T and multi_ref_idx_L for the top-referencing area and the left-referencing area to determine which method to use for prediction. For example, as illustrated in FIG. 16, if multi_ref_idx_T is 0, the video encoding device determines multiple reference lines to be used for weighted-combining for the top-referencing area according to Example 2. The video encoding device may determine the multiple reference lines (intra_luma_ref_idx 1, 2) according to Example 2-2-3, may generate predictors by using the respective reference lines, and may weighted combine the predictors by using equal weights according to Example 2-2-1.

As illustrated in FIG. 16, if multi_ref_idx_L is 1, the video encoding device may further divide the left-referencing area into a plurality of internal areas according to Example 3 and may use different reference lines for different areas. The video encoding device determines num_subArea and the reference lines (intra_luma_ref_idx 0, 1, 2, 3) according to Example 3-3, divides the left-referencing area into four internal areas according to the num_subArea, and generates a predictor for each internal area by using the corresponding reference line. Following the rule of signaling first the reference line index of the internal area closer to the reference line, the reference line indices may be signaled in the order of intra_luma_ref_idx 2, intra_luma_ref_idx 3, intra_luma_ref_idx 1, and intra_luma_ref_idx 0.

The following syntax elements are required for this example. One or more of these syntax elements may be used.

The element adaptive_mrl_flag is a flag indicating whether adaptive MRL is to be applied and may have values of 0 and 1. If the flag is 0, the video encoding device uses intra_luma_ref_idx 0 for the top and left reference lines, and if the flag is 1, the video encoding device determines according to the example how the left and top reference lines are determined. If adaptive_mrl_flag is not present, adaptive_mrl_flag is inferred to be 0.

The single_ref_T_flag is a flag indicating whether a single top reference line is to be used and may have values of 0 and 1. If this flag is 1, the video encoding device may use a single reference line determined by Example 1 for the top reference line, or if the flag is 0, the video encoding device may use multiple top reference lines determined according to Example 2 or Example 3.

The single_ref_L_flag is a flag indicating whether a single left reference line is to be used and may have values of 0 and 1. If this flag is 1, the video encoding device may use a single reference line determined according to Example 1 for the left reference line, and if the flag is 0, the video encoding device may use multiple left reference lines determined according to Example 2 or Example 3.

The element multi_ref_idx_T is an index indicating how to determine the top reference line, which may have values of 0 and 1. If this index is 0, the video encoding device may use a plurality of top reference lines according to Example 2 for the top-referencing area, and, if this index is 1, the video encoding device may use a plurality of top reference lines according to Example 3.

The element multi_ref_idx_L is an index indicating how to determine the left reference line, which may have values of 0 and 1. If this index is 0, the video encoding device may use a plurality of left reference lines according to Example 2 for the left-referencing area, and if it is 1, the video encoding device may use a plurality of left reference lines according to Example 3.

Specific pseudo code according to this example may be realized as follows. Either the signal indicating whether to use a single top reference line or the signal indicating whether to use a single left reference line may be parsed first. The information required for the respective examples depends on the syntax composition as described above.

| **Parse intra-prediction mode** |
|---|
| if (prediction mode using both top and left reference lines) |

(continued)

| Parse a signal indicating whether to apply Adaptive MRL (adaptive_mrl_flag) | | |
|---|---|---|
| if (Adaptive MRL applied) | | |
| Parse a signal indicating whether to use a single top reference line (single_ref_T_flag) | | |
| Parse a signal indicating whether to use a single left reference line (single_ref_L_flag) | | |
| if (determining the single top reference line according to Example 1) | | |
| Parse information on the single top reference line according to Example 1 | | |
| else { | | |
| Parse information on the method of determining top reference lines (multi_ref_idx_ T) | | |
| if (determining multiple top reference lines according to Example 2 (multi_ref_idx_T)) | | |
| | | Parse information on multiple top reference lines and weights according to Example 2 |
| else | | |
| | | Parse information on multiple top reference lines according to Example 3 |
| } | | |
| if (determining the single left reference line according to Example 1) | | |
| Parse information on the single left reference line according to Example 1 | | |
| else { | | |
| Parse information on the method of determining left reference lines (multi_ref_idx_L) | | |
| if (determining multiple left reference lines according to Example 2 (multi_ref_idx_L)) | | |
| | | Parse information on multiple left reference lines and weights according to Example 2 |
| else | | |
| | | Parse information on multiple left reference lines according to Example 3 |
| } | | |

<Example 5> Selectively using the methods of Examples 1 to 4.

In this example, the video encoding device signals additional information to selectively apply the methods of Examples 1 to 4 as described above. The video encoding device may send an adaptive_mrl_flag to indicate information on the reference line for use in the prediction of the current block. In one example, as shown in Table 40, the video encoding device may use conventional techniques without following the present disclosure when adaptive_mrl_flag is 0 and may use Example 3 when adaptive_mrl_flag is 1.

[Table 40]

| adaptive_mrl_flag | 0 | Use existing technology |
|---|---|---|
| | 1 | Determine reference lines according to Example 3 |

In another example, as shown in Table 41, the video encoding device may selectively use one of the methods of Examples 1 to 4 by additionally signaling adaptive_mrl_idx when adaptive_mrl_flag is 1.

[Table 41]

| adaptive_mrl_flag | 0 | Use existing technology | | |
|---|---|---|---|---|
| | 1 | adaptive_mrl_idx | 0 | Determine reference lines according to Example 1 |
| | | | 1 | Determine reference lines according to Example 2 |
| | | | 2 | Determine reference lines according to Example 2 |
| | | | 3 | Determine reference lines according to Example 2 |

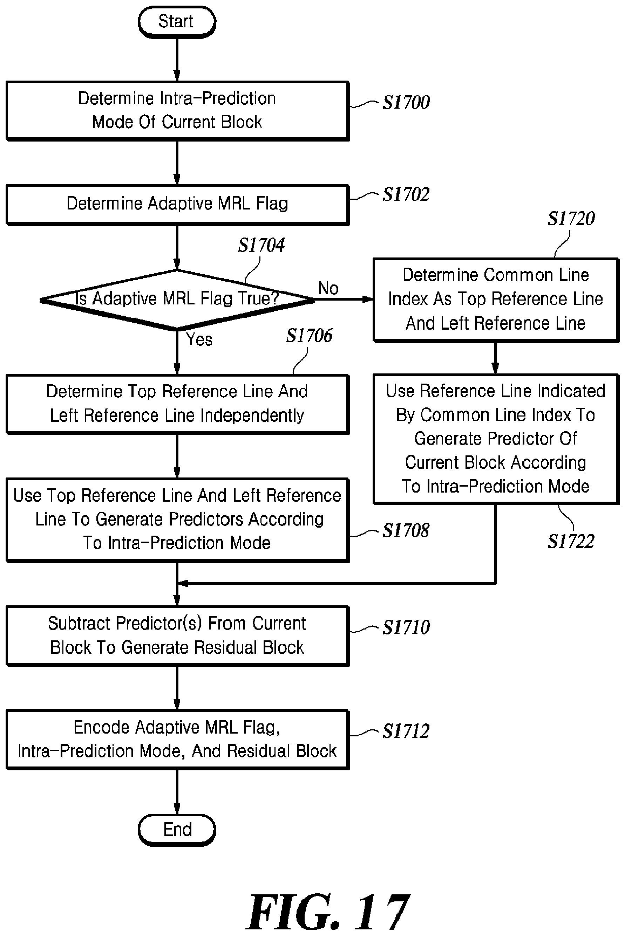

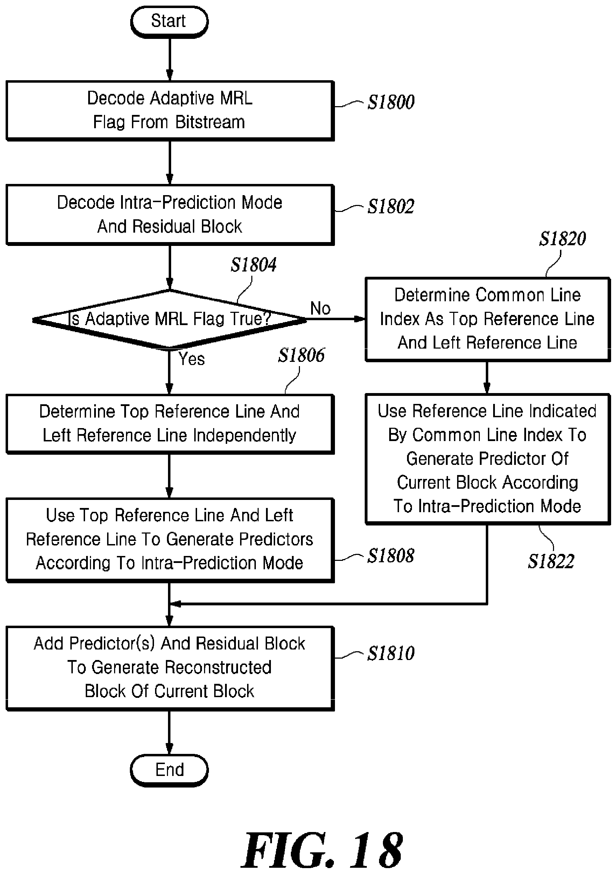

The following describes, with reference to FIGS. 17 and 18, methods of intra-predicting and encoding/decoding the current block by a video encoding device or a video decoding device according to Example 1. The methods of intra-predicting and encoding/decoding the current block by the video encoding device or video decoding device may be similarly described for Example 2 and Example 3.

FIG. 17 is a flowchart of an encoding method of the current block by a video encoding device, according to at least one embodiment of the present disclosure.

The video encoding device determines an intra-prediction mode of the current block (S1700). The video encoding device may determine the intra-prediction mode in terms of optimizing coding efficiency.

The video encoding device determines an adaptive MRL flag (S1702). Here, the adaptive MRL flag of adaptive_mrl_flag indicates whether the adaptive MRL technique is to be applied when the intra-prediction mode of the current block is the horizontal mode 18 or above and the vertical mode 50 or below. The video encoding device may determine the adaptive MRL flag in terms of optimizing coding efficiency. If the adaptive MRL flag is not determined, the adaptive MRL flag may be inferred to be false.

The video encoding device checks whether the adaptive MRL flag is true (S1704).

When the adaptive MRL flag is true (Yes in S1704), the video encoding device performs the following steps.

The video encoding device determines a top reference line and a left reference line independently (S1706). The video encoding device determines, for the top-referencing area within the current block, a top reference line of the multiple reference lines located at the top of the current block. The video encoding device determines, for the left-referencing area within the current block, a left reference line of the multiple reference lines located to the left of the current block. Here, the top reference line is indicated by the top reference line index, and the left reference line is indicated by the left reference line index.

The video encoding device may, according to Example 1-1, derive and then may encode the top reference line index and the left reference line index by referencing data from at least one of the information on the current block or the information on the neighboring block.

For example, the video encoding device may derive the top reference line index based on the top maximum distance out of the information on the current block and may derive the left reference line index based on the left maximum distance thereof. Here, as illustrated in FIG. 8, the top maximum distance represents the maximum of the distances between the pixels in the top-referencing area and the top boundary of the current block, and the left maximum distance represents the maximum of the distances between the pixels in the left-referencing area and the left boundary of the current block.

The video encoding device may, according to Example 1-2, determine an index of one of the top reference line index or the left reference line index and may derive the other remaining index. The video encoding device may determine the one index in terms of optimizing coding efficiency and may encode the one index. Further, the other remaining index may be derived by referencing data from at least one of the information on the current block or the information on the neighboring block, according to Example 1-1.

In one example, the video encoding device may determine one index by a predefined direction and may encode the same. Here, the predefined direction may be leftward or upward.

In another example, the video encoding device may determine a signaling direction in terms of optimizing coding efficiency and may determine one index by the determined signaling direction. The video encoding device may then encode the signaling direction and the one index.

In yet another example, the video encoding device may be responsive to the neighboring block utilizing adaptive MRL technology for deriving the signaling direction of the one index based on the signaling direction of the reference index of the neighboring block. Then, upon determining the one index by the signaling direction, the video encoding device may encode the one index.

The video encoding device may determine according to Example 1-3-1, the top reference line index and the left reference line index in terms of optimizing the coding efficiency, and then may encode them.

In yet another example, the video encoding device may take Example 1-3-2 to determine the top reference line index and the left reference line index and then may use one index of these indices as a basis to generate a difference value for the other remaining index. The video encoding device may then encode the one index and the difference value.

In yet another example, the video encoding device takes Example 1-3-3 to determine a set of the top reference line index and the left reference line index in terms of optimizing coding efficiency. The video encoding device may determine a set index indicative of the determined set from the reference line-set list and then may encode the set index. In this case, the reference line-set list may be organized according to a preset method.

The video encoding device generates predictors for the top-referencing area and the left-referencing area according to the intra-prediction mode by using the top reference line and the left reference line (S 1708).

The video encoding device may further apply a filter to the boundary between the top-referencing area and the left-referencing area to remove discontinuities that occur at the boundary between the predictors.

The video encoding device subtracts the predictor(s) from the current block to generate a residual block (S1710).

The video encoding device encodes the adaptive MRL flag, the intra-prediction mode, and the residual block (S1712).

When the adaptive MRL flag is false (No in S1704), the video encoding device may perform the following steps to perform the intra prediction conventionally.

The video encoding device determines a common line index as the top reference line and the left reference line for the current block (S1720). Here, the common line index, e.g., intra_luma_ref_idx 0, indicates at least one of the top reference line or the left reference line adjacent to the current block.

The video encoding device generates a predictor of the current block by using the reference line indicated by the common line index according to the intra-prediction mode (S1722).

Thereafter, the video encoding device may perform Steps S1710 and S1712.

FIG. 18 is a flowchart of a decoding method of the current block by a video decoding device, according to at least one embodiment of the present disclosure.

The video decoding device decodes the adaptive MRL flag from the bitstream (S1800). Here, the adaptive MRL flag of adaptive_mrl_flag indicates whether the adaptive MRL technique is to be applied when the intra-prediction mode of the current block is above the horizontal mode and below the vertical mode. If the adaptive MRL flag is not present, the adaptive MRL flag may be inferred to be false.

The video decoding device decodes the intra-prediction mode and the residual block from the bitstream (S1802).

The video decoding device checks whether the adaptive MRL flag is true (S1804).

When the adaptive MRL flag is true (Yes in S1804), the video decoding device performs the following steps.

The video decoding device determines a top reference line and a left reference line independently (S1806). The video decoding device determines, for the top-referencing area within the current block, a top reference line of the multiple reference lines located at the top of the current block. The video decoding device determines, for the left-referencing area within the current block, a left reference line of the multiple reference lines located to the left of the current block. Here, the top reference line is indicated by a top reference line index, and the left reference line is indicated by a left reference line index.

The video decoding device may take Example 1-1 to derive the top reference line index and the left reference line index by referencing data from at least one of the information on the current block or the information on the neighboring block.

For example, the video decoding device may derive the top reference line index based on the top maximum distance out of the information on the current block and may derive the left reference line index based on the left maximum distance thereof. Here, as illustrated in FIG. 8, the top maximum distance represents the maximum of distances between the pixels in the top-referencing area and the top boundary of the current block, and the left maximum distance represents the maximum of distances between the pixels in the left-referencing area and the left boundary of the current block.

The video decoding device may, according to Example 1-2, decode from the bitstream one index between the top reference line index and the left reference line index and may derive the other remaining index. The other remaining index may be derived according to Example 1-1 by referencing data from at least one of the information on the current block or the information on the neighboring block.

In one example, the video decoding device may decode from the bitstream the one index by a predefined direction. Here, the predefined direction may be leftward or upward.

In another example, upon decoding a signaling direction from the bitstream, the video decoding device may decode the one index from the bitstream by the decoded signaling direction.

In yet another example, the video decoding device may be responsive to the neighboring block utilizing an adaptive MRL technique for deriving the signaling direction of the one index based on the signaling direction of the reference index of the neighboring block. The video decoding device may then decode the one index from the bitstream by the derived signaling direction.

The video decoding device may take Example 1-3-1 to decode from the bitstream the top reference line index and the left reference line index.

In yet another example, the video decoding device may, according to Example 1-3-2, decode from the bitstream the one index between the top reference line index and the left reference line index. The video decoding device may decode the difference value of the other remaining index from the bitstream and then may add the one index and the difference value to generate the remaining index.

In yet another example, the video decoding device decodes a set index from the bitstream, according to Example 1-3-3. Here, the set index may indicate a reference line set within a reference line-set list, the reference line set may indicate a pair of the top reference line index and the left reference line index, and the reference line-set list may be organized according to a preset scheme. The video decoding device may use the set index to generate from the reference line-set list the top reference line index and the left reference line index.

The video decoding device may generate predictors for the top-referencing area and the left-referencing area according to an intra-prediction mode by using the top reference line and the left reference line (S1808).

The video decoding device may further apply a filter to the boundary between the top-referencing area and the left-referencing area to remove discontinuities that occur at the boundary between the predictors.

The video decoding device adds the residual block and the predictor(s) to generate a reconstructed block of the current block (S1810).

When the adaptive MRL flag is false (No in S1804), the video decoding device performs the following steps to perform the intra prediction conventionally.

The video decoding device determines a common line index as the top reference line and the left reference line for the current block (S1820). Here, the common line index, e.g., intra_luma_ref_idx 0, indicates at least one of the top reference line or the left reference line adjacent to the current block.

The video decoding device generates a predictor of the current block according to the intra-prediction mode by using the reference line indicated by the common line index (S 1822).

Thereafter, the video decoding device may perform Step S1810.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in the present disclosure are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media, such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

(Reference Numerals)

122: intra predictor
155: entropy encoder
510: entropy decoder
542: intra predictor

**EP 4 436 167 A1**

CROSS-REFERENCE TO RELATED APPLICATIONS

This application claims priority to and the benefit of Korean Patent Application No. 10-2021-0185675, filed on December 23, 2021, and Korean Patent Application No. 10-2022-0153411, filed on November 16, 2022, the entire contents of each of which are incorporated herein by reference.

**Claims**

1.  A method of intra-predicting a current block by a video decoding device, the method comprising:

    decoding from a bitstream an adaptive multiple reference line (MRL) flag that indicates whether to apply an adaptive MRL technique when an intra-prediction mode of the current block is greater than a horizontal mode and less than a vertical mode;
    decoding the intra-prediction mode from the bitstream; and
    checking the adaptive MRL flag,
    wherein, when the adaptive MRL flag is true, the method further includes:

    determining, for a top-referencing area in the current block, a top reference line of one among multiple reference lines located at a top side of the current block, and determining, for a left-referencing area in the current block, a left reference line of one among multiple reference lines located to a left side of the current block, the top reference line being indicated by a top reference line index and the left reference line being indicated by a left reference line index; and
    generating, for the top-referencing area and the left-referencing area, predictors by using the top reference line and the left reference line according to the intra-prediction mode.

2.  The method of claim 1, wherein, when the adaptive MRL flag is false, the method further comprises:

    determining a common line index as the top reference line and left reference line for the current block, the common line index indicating at least one of a top reference line or a left reference line adjacent to the current block; and
    generating a predictor of the current block by using a reference line indicated by the common line index according to the intra-prediction mode.

3.  The method of claim 1, wherein generating the predictors includes:
    further applying a filter to a boundary between the predictors to remove discontinuities occurring at the boundary.

4.  The method of claim 1, wherein decoding the adaptive MRL flag includes:
    when the adaptive MRL flag is not present, inferring the adaptive MRL flag to be false.

5.  The method of claim 1, wherein determining among the reference lines includes:
    deriving the top reference line index and the left reference line index by referencing data from at least one of information on the current block and information on adjacent blocks.

6.  The method of claim 5, wherein determining among the reference lines includes:
    deriving the top reference line index based on an upper maximum distance among the information on the current block, the upper maximum distance representing a maximum of distances between pixels in the top-referencing area and a top boundary of the current block.

7.  The method of claim 1, wherein determining among the reference lines includes:

    decoding, from the bitstream, one index between the top reference line index and the left reference line index; and
    deriving a remaining index of the top reference line index and the left reference line index by referencing data from at least one of information on the current block and information on adjacent blocks.

8.  The method of claim 7, wherein decoding the one index includes:
    decoding, from the bitstream, the one index by a predefined direction which is leftwise or topwise.

9. The method of claim 7, wherein decoding the one index includes:

decoding, from the bitstream, a signaling direction of the one index; and
decoding, from the bitstream, the one index based on the signaling direction.

10. The method of claim 7, wherein decoding the one index includes:

when the adaptive MRL technique is used by a neighboring block, deriving a signaling direction of the one index based on a signaling direction of a reference index of the neighboring block; and
decoding, from the bitstream, the one index based on the signaling direction.

11. The method of claim 1, wherein determining among the reference lines includes:
decoding from the bitstream the top reference line index and the left reference line index.

12. The method of claim 1, wherein determining among the reference lines includes:

decoding, from the bitstream, one index between the top reference line index and the left reference line index;
decoding, from the bitstream, a difference value of a remaining index of the top reference line index and the left reference line index; and
generating the remaining index by adding the one index and the difference value.

13. The method of claim 1, wherein determining among the reference lines inlcudes:

decoding, from the bitstream, a set index that indicates a set of reference lines in a reference line-set list, the set of reference lines indicating a pair of the top reference line index and the left reference line index, the reference line-set list being composed according to a preset scheme; and
generating the top reference line index and the left reference line index from the reference line-set list by using the set index.

14. A method of encoding a current block by a video encoding device, the method comprising:

determining an intra-prediction mode of the current block;
determining an adaptive multiple reference line (MRL) flag that indicates whether to apply an adaptive MRL technique when the intra-prediction mode of the current block is greater than a horizontal mode and less than a vertical mode; and
checking the adaptive MRL flag,
wherein, when the adaptive MRL flag is true, the method further includes:

determining, for a top-referencing area in the current block, a top reference line of one among multiple reference lines located at a top side of the current block, and determining, for a left-referencing area in the current block, a left reference line of one among multiple reference lines located to a left side of the current block, the top reference line being indicated by a top reference line index and the left reference line being indicated by a left reference line index; and
generating, for the top-referencing area and the left-referencing area, predictors by using the top reference line and the left reference line according to the intra-prediction mode.

15. The method of claim 14, wherein, when the adaptive MRL flag is false, the method further comprises:

determining a common line index as the top reference line and left reference line for the current block, the common line index indicating at least one of a top reference line or a left reference line adjacent to the current block; and
generating a predictor of the current block by using a reference line indicated by the common line index according to the intra-prediction mode.

16. The method of claim 14, wherein generating the predictors includes:
further applying a filter to a boundary between the predictors to remove discontinuities occurring at the boundary.

17. A computer-readable recording medium storing a bitstream generated by a video encoding method, the video encoding method comprising:

determining an intra-prediction mode of a current block;
determining an adaptive multiple reference line (MRL) flag that indicates whether to apply an adaptive MRL technique when the intra-prediction mode of the current block is greater than a horizontal mode and less than a vertical mode; and
checking the adaptive MRL flag,
wherein, when the adaptive MRL flag is true, the method further includes:

determining, for a top-referencing area in the current block, a top reference line of one among multiple reference lines located at a top side of the current block, and determining, for a left-referencing area in the current block, a left reference line of one among multiple reference lines located to a left side of the current block, the top reference line being indicated by a top reference line index and the left reference line being indicated by a left reference line index; and
generating, for the top-referencing area and the left-referencing area, predictors by using the top reference line and the left reference line according to the intra-prediction mode.

Current picture → Picture splitter (110)

Transformer (140) → Quantizer (145) → Rearrangement unit (150) → Entropy encoder (155) → NAL

Inverse quantizer (160) → Inverse transformer (165)

Inter-predictor (124) / Intra-predictor (122) — Predictor (120)

Deblocking filter (182) → SAO (184) → ALF (186) — Filter (180)

Memory (190)

(130) (170)

**FIG. 1**

QT

No_Split  No_Split  No_Split  Split

BTTT

No_Split  Split

Horizontal  Vertical

# FIG. 2

FIG. 3A

**FIG. 3B**

| B2 | | | | B0 | B1 |
|----|--|--|--|----|----|

| | | | |
|--|--|--|--|
| A0 | | | |
| A1 | | | |

# FIG. 4

Bitstream → Entropy decoder *510* → Rearrangement unit *515* → Inverse quantizer *520* → Inverse transformer *530* → + *550* → Reconstructed video

*540* *544* Inter-predictor

*542* Intra-predictor

*570* Memory ← *560* *566* ALF ← *564* SAO ← *562* Deblocking filter

# FIG. 5

☐ Current Block

▨ intra_luma_ref_inx 0

▨ intra_luma_ref_inx 1

▨ intra_luma_ref_inx 2

# FIG. 6

EP 4 436 167 A1

Top-Referencing Area

Left-Referencing Area

□ Current Block

▨ intra_luma_ref_inx 0

▨ intra_luma_ref_inx 1

◩ intra_luma_ref_inx 2

▨ intra_luma_ref_inx 3

▦ As Top-Referencing Area, Use intra_luma_ref_idx 0 To Make Prediction

▨ As Left-Referencing Area, Use intra_luma_ref_idx 1 To Make Prediction

*FIG. 7*

58

Left-Referencing Area

Top-Referencing Area

Prediction Mode

FIG. 8

N
∴

N ∙ ∙ ∙

☐ Current Block

▨ intra_luma_ref_inx 0

▦ intra_luma_ref_inx 1

▨ intra_luma_ref_inx 2

▩ intra_luma_ref_inx 3

$\Sigma \begin{cases} W_0 \times \\ W_1 \times \\ W_2 \times \\ W_3 \times \end{cases}$

# FIG. 9

**FIG. 10**

□ Current Block

▨ intra_luma_ref_inx 0

▨ intra_luma_ref_inx 1

◹ intra_luma_ref_inx 2

⊡ intra_luma_ref_inx 3

▦ Use intra_luma_ref_inx 0 To Make Prediction

⬡ Use intra_luma_ref_inx 1 To Make Prediction

*FIG. 11*

N
⋮

H = 16

W = 16

num_subArea = 2

N
⋮

H = 16

W = 8

num_subArea = 3

▨ intra_luma_ref_inx 0          ☐ Current Block

▓ intra_luma_ref_inx 1          ⸢⸥ Top-Referencing Internal Areas

◹ intra_luma_ref_inx 2          ↖ Prediction Mode

⬚ intra_luma_ref_inx 3

# FIG. 12

**FIG. 13**

Current Block

intra_luma_ref_inx 0

intra_luma_ref_inx 1

intra_luma_ref_inx 2

intra_luma_ref_inx 3

Top-Referencing Area − Weighted Combine Top Reference Lines (idx 0, 1, 2)

Left-Referencing Area − Weighted Combine Left Reference Lines (idx 1, 2)

Prediction Mode

*FIG. 14*

Current Block

intra_luma_ref_inx 0

intra_luma_ref_inx 1

intra_luma_ref_inx 2

intra_luma_ref_inx 3

Top-Referencing Internal Areas

Left-Referencing Internal Areas

Prediction Mode

## FIG. 15

N
.
.
.

N · · ·

☐ Current Block

▨ intra_luma_ref_inx 0

▨ intra_luma_ref_inx 1

◪ intra_luma_ref_inx 2

▥ intra_luma_ref_inx 3

⌐¬  Top-Referencing Area − Weighted Combine
∟⌐  Top Reference Lines (idx 1, 2)

☐ Left−Referencing Internal Areas

↖ Prediction Mode

*FIG. 16*

Start

Determine Intra-Prediction
Mode Of Current Block — *S1700*

Determine Adaptive MRL Flag — *S1702*

*S1704*

Is Adaptive MRL Flag True? — No → Determine Common Line
Index As Top Reference Line
And Left Reference Line — *S1720*

Yes — *S1706*

Determine Top Reference Line And
Left Reference Line Independently

Use Reference Line Indicated
By Common Line Index To
Generate Predictor Of
Current Block According
To Intra-Prediction Mode — *S1722*

Use Top Reference Line And Left Reference
Line To Generate Predictors According
To Intra-Prediction Mode — *S1708*

Subtract Predictor(s) From Current
Block To Generate Residual Block — *S1710*

Encode Adaptive MRL Flag,
Intra-Prediction Mode, And Residual Block — *S1712*

End

## FIG. 17

**FIG. 18**

## INTERNATIONAL SEARCH REPORT

| International application No. |
| --- |
| **PCT/KR2022/018345** |

**A. CLASSIFICATION OF SUBJECT MATTER**

**H04N 19/105**(2014.01)i; **H04N 19/593**(2014.01)i; **H04N 19/11**(2014.01)i; **H04N 19/176**(2014.01)i; **H04N 19/186**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/105(2014.01); H04N 19/11(2014.01); H04N 19/117(2014.01); H04N 19/174(2014.01); H04N 19/176(2014.01); H04N 19/52(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), 참조(reference), 라인(line), 모드 (mode), 플래그(flag), 인덱스(index)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0063092 A (XRIS CORPORATION) 04 June 2020 (2020-06-04)<br>See paragraphs [0017], [0047], [0055], [0059], [0063]-[0064], [0076], [0115]-[0123], [0139], [0147]-[0152] and [0166]; claim 1; and figures 2 and 6-10. | 1-10,14-17 |
| Y | | 11-13 |
| Y | US 10715827 B2 (MEDIATEK INC.) 14 July 2020 (2020-07-14)<br>See claims 1-4. | 11-12 |
| Y | US 2020-0007870 A1 (QUALCOMM INCORPORATED) 02 January 2020 (2020-01-02)<br>See claims 1 and 10-11. | 13 |
| A | WO 2020-256506 A1 (LG ELECTRONICS INC.) 24 December 2020 (2020-12-24)<br>See claims 1-11. | 1-17 |

☑ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **10 March 2023** | **13 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/018345**

| C. | DOCUMENTS CONSIDERED TO BE RELEVANT | | |
|---|---|---|
| Category* | Citation of document, with indication, where appropriate, of the relevant passages | Relevant to claim No. |
| A | WO 2020-009906 A1 (TENCENT AMERICA LLC.) 09 January 2020 (2020-01-09)<br>See claims 1-10. | 1-17 |

Form PCT/ISA/210 (second sheet) (July 2022)

**INTERNATIONAL SEARCH REPORT**
**Information on patent family members**

International application No.

**PCT/KR2022/018345**

| Patent document cited in search report | | | Publication date (day/month/year) | Patent family member(s) | | | Publication date (day/month/year) |
|---|---|---|---|---|---|---|---|
| KR | 10-2020-0063092 | A | 04 June 2020 | CN | 112219397 | A | 12 January 2021 |
| | | | | US | 2021-0243429 | A1 | 05 August 2021 |
| | | | | WO | 2020-111785 | A1 | 04 June 2020 |
| US | 10715827 | B2 | 14 July 2020 | CN | 110169061 | A | 23 August 2019 |
| | | | | CN | 110169061 | B | 10 May 2022 |
| | | | | EP | 3549340 | A1 | 09 October 2019 |
| | | | | US | 2018-0199054 | A1 | 12 July 2018 |
| | | | | WO | 2018-127188 | A1 | 12 July 2018 |
| US | 2020-0007870 | A1 | 02 January 2020 | CN | 112369027 | A | 12 February 2021 |
| | | | | EP | 3815365 | A1 | 05 May 2021 |
| | | | | US | 11159806 | B2 | 26 October 2021 |
| | | | | WO | 2020-005506 | A1 | 02 January 2020 |
| WO | 2020-256506 | A1 | 24 December 2020 | | None | | |
| WO | 2020-009906 | A1 | 09 January 2020 | US | 10819977 | B2 | 27 October 2020 |
| | | | | US | 11356661 | B2 | 07 June 2022 |
| | | | | US | 2020-0014920 | A1 | 09 January 2020 |
| | | | | US | 2020-0404261 | A1 | 24 December 2020 |

Form PCT/ISA/210 (patent family annex) (July 2022)

**REFERENCES CITED IN THE DESCRIPTION**

**Patent documents cited in the description**

- KR 1020210185675

- KR 1020220153411